(19) Europäisches Patentamt
European Patent Office
Office européen des brevets

(11) EP 3 586 629 A1

(12) EUROPEAN PATENT APPLICATION

(43) Date of publication:
**01.01.2020 Bulletin 2020/01**

(51) Int Cl.:
***A01N 35/06*** *(2006.01)*

(21) Application number: **18180464.2**

(22) Date of filing: **28.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Domobios**
**1200 Woluwe-Saint-Lambert (BE)**

(72) Inventors:
- **MAILLEUX, Anne-Catherine**
**1332 Genval (BE)**
- **SOLHEID, Manhattan**
**4950 Ovifat/Waimes (BE)**
- **MANGHI, Alice**
**1050 Ixelles (BE)**
- **PEETERS, Céline**
**1080 Molenbeek-Saint-Jean (BE)**
- **CLOTUCHE, Gwendoline**
**1490 Court-Saint-Etienne (BE)**

(74) Representative: **Office Kirkpatrick**
**Avenue Wolfers, 32**
**1310 La Hulpe (BE)**

# (54) COMPOSITIONS FOR ATTRACTING PESTS AND USES THEREOF

(57) The present invention relates to compositions comprising menthone, either alone or within an essential oil such as peppermint oil, for attracting pests, in particular acarids. The present invention also relates to methods and devices for attracting pests, in particular acarids.

EP 3 586 629 A1

## Description

### FIELD OF INVENTION

The present invention relates to the field of pest control and more precisely to compositions comprising menthone for attracting pests, in particular acarids. The present invention also relates to devices and methods for attracting pests, in particular acarids.

### BACKGROUND OF INVENTION

Pest eradication is time-consuming, expensive, and yet universally needed. Indeed, pests may be responsible for contaminating food, for causing damage to their environment, for inducing allergies in humans and animals, or for spreading diseases to humans and animals.

Pests can be found virtually everywhere. For example, pests such as mites, ticks, cockroaches, bed bugs, ladybugs, lice, fleas, and ants can commonly be found in houses and/or in gardens and may cause significant nuisances at a domestic level. Some of these pests, for example mites, ants and cockroaches, can also be found in foodstuffs and may cause significant nuisances at an agricultural and/or industrial level. In particular, acarids such as storage mites and dust mites are widespread and can be found worldwide, mostly in foodstuffs and in dwellings.

Storage mites (also known as stored-product mites) thrive in foodstuffs, for example in grains, cereals, flour, biscuits, dry industrial foods, and dry pet food. They damage food stocks and cause significant economic losses. Storage mites can also be found in houses, and in particular in the environment provided by furniture such as beds, mattresses, carpets, armchairs, sofas, or padded pieces used by humans and pets. Moreover, storage mites can trigger respiratory, food and skin allergies. In some severe cases, storage mites can induce an anaphylactic shock (Thind and Clark, 2001). Pets, in particular dogs and cats, are also affected by storage mites and may suffer from infestations responsible for atopic dermatitis (Colloff, 2009). Therefore, storage mites are also of high veterinary importance. Finally, some storage mites are associated with the spreading of fungi (molds) in foodstuffs. Storage mites may thus increase the risk of occurrence of mycotoxins in food.

Dust mites (also known as "house dust mites") thrive in houses, and in particular in the environment provided by furniture such as beds, mattresses, carpets, armchairs, sofas, or padded pieces used by humans. Dust mites also develop in animal pens and pet houses, such as dog or cat baskets. Dust mites can be responsible for health problems in vertebrates, since they are susceptible to cause allergy in birds, as well as in mammals, such as horses, goats, cows and pets, and in humans. Dust mites can induce allergic symptoms in humans, which may lead to fatal reaction in some severe cases. Dust mites can also be responsible for atopic dermatitis in pets, and more specifically in dogs and cats (Colloff, 2009).

Generally, two types of pest control methods are currently available: chemical pest control and mechanical (or physical) pest control.

Chemical control relies on the use of pesticides, such as insecticides and acaricides. For example, a common and simple way of dealing with an acarid infestation consists in the use of pesticides. Currently, pesticides are thus the main weapon used by food storage managers seeking to control an infestation of storage mites. However, pesticides merely kill the mites, but do not remove them or the allergens they produce. Moreover, pesticides may have drastic effects on human health. In fact, many of them have recently been banned and many others may yet be withdrawn from the market (European Commission, 2007). The most commonly used pesticides for acarid eradication are usually compounds with a pyrethrum base, which is often labelled as harmless. However, toxicological studies are generally carried out over short periods, and cannot ascertain the long-term effect of the accumulation of these compounds on the human organism. In any case, studies show that acarids can become resistant to pesticides within 4-5 years (Van Leeuwen *et al.,* 2008; Van Leeuwen *et al.,* 2009; Attia *et al.,* 2013). It is thus necessary to constantly carry out further research to find new compounds with insecticide properties, which are not themselves susceptible to induce allergy in humans and/or in animals. All things considered, despite its common use, chemical pest control is associated with several drawbacks: it may be toxic for humans and/or for animals, it may be toxic for the environment as some pesticides are highly persistent, and it may induce the widespread development of resistance. In particular, as the use of potentially toxic compounds in a home environment and/or in food stocks is generally viewed as unsafe and ill-adapted, alternative to pesticides are needed in methods seeking to remove pests, in particular acarids, from houses, gardens and food stocks.

Mechanical (or physical) pest control does not rely on the use of pesticides and rather consists in using devices or traps to remove or to kill pests. Its main advantage is to not introduce any resistance. Mechanical (or physical) pest control is recommended to decrease and remove a maximum of the pest load, including the pests themselves and the allergens they may produce. For example, it is sometimes possible to remove mites by vacuuming, such as, for example, dust mites living in carpets. However, this method only removes the mites living on the surface of carpets. Its success depends on the quality of the equipment used, and in particular of the collection bags, which are key in preventing the

spreading of mites, and more importantly of mite-derived allergens. This method is of limited use since not all mite-containing material are amenable to being treated in this way. Other examples of mechanical pest control include the elimination of storage mites from foodstuffs by cold (freezing), by replacing of oxygen by nitrogen in storage bags, and by using traps. Freezing is the most effective method but is not suitable for all types of food. Replacing oxygen by injecting nitrogen into hermetically sealed storage bags is practical and commonly used by industrials but has two main disadvantages. First, it is only moderately effective because it is impossible to remove all the oxygen, and mites can still develop and damage the stored food. Second, it only works if the bag remains unopened and intact. Therefore, removing pests, in particular acarids, from food stocks or from houses and furniture such as mattresses or sofas remains a challenge in terms of accessibility to the pests which may be deep inside the material or the stores. Moreover, mechanical (or physical) pest control is time-consuming and requests many repetitions, most of the time without leading to a total overcome of the pest infestation.

Therefore, key aspects impeding the success of all conventional pest control methods to date are safety, accessibility and efficacy. Notably, removing pests, in particular acarids, from foodstuffs, from inhabited houses and gardens, and from pet houses is thus a challenge in terms of safety to the user and consumer.

Attracting agents have been known to lure pests, in particular acarids, to a designated area, thus facilitating their elimination. Attracting agents are thus often combined with pesticides, for example in methods to kill mites as described in JP2000336007 and JP2001247410.

There is still a need to provide methods for effective and safe pest removal, in particular removal of acarids. Notably, there exists a need for methods and compounds that are less toxic for animal and humans, *i.e.,* safe for human and animal health and for the environment, cost-effective and easily implemented both in a home environment and in an industrial or professional setting.

The present invention thus relates to compositions for attracting pests, in particular acarids, comprising menthone either alone or within an essential oil such as peppermint oil. The present invention also relates to the use of said compositions for attracting pests, in particular acarids, and notably their use in methods for attracting pests, in particular acarids, for a safe and effective removal of said pests.

## SUMMARY

The present invention relates to use of a composition comprising menthone for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera.

In one embodiment, said composition comprises menthone at a concentration ranging from about $10^{-12}$ mg/mL to about 100 mg/mL.

In one embodiment, said composition comprises an essential oil, wherein said essential oil comprises said menthone. In one embodiment, said essential oil is selected from the group comprising essential oils of *Mentha piperita, Mentha arvensis, Mentha canadensis, Mentha cervina, Mentha pulegium, Mentha aquatica, Mentha pulegioides* and *Mentha longifolia.* In one embodiment, said essential oil is essential oil of *Mentha piperita.* In one embodiment, the concentration of said essential oil in the composition ranges from about $10^{-15}$ to about $10^{-1}$ L/L.

In one embodiment, said composition comprises at least one additional attracting agent. In one embodiment, said at least one additional attracting agent is selected from the group comprising tartaric acid, lavender oil, linseed oil, octen-3-ol and acetic acid.

In one embodiment, said composition further comprises at least one solvent, at least one stabilizer, at least one emulsifier and/or at least one perfume.

In one embodiment, said pests are selected from the group comprising mites, ticks, ladybugs, fleas, lice, bed bugs, cockroaches and ants. In one embodiment, said pests are mites.

The invention also relates to a method for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera, comprising the following steps:

a) optionally providing a support to hold said pests;
b) contacting said support with a composition comprising menthone at a concentration ranging from about $10^{-12}$ mg/mL to about 100 mg/mL or an essential oil comprising menthone, preferably essential oil of *Mentha piperita,* wherein the concentration of said essential oil in the composition ranges from about $10^{-15}$ to about $10^{-1}$ L/L; and
c) positioning the support in a room or a place or at proximity to an object or a place suspected of containing said pests;

wherein steps b) and c) can be interchanged.
In one embodiment, said pests are selected from the group comprising mites, ticks, ladybugs, fleas, lice, bed bugs, cockroaches and ants. In one embodiment, said pests are mites.

The present invention also relates to a kit for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera, comprising a composition comprising menthone at a concentration ranging from about $10^{-12}$ mg/mL to about 100 mg/mL or an essential oil comprising menthone, preferably essential oil of *Mentha piperita,* wherein the concentration of said essential oil in the composition ranges from about $10^{-15}$ to about $10^{-1}$ L/L, and optionally a support to hold said pests.

**DEFINITIONS**

In the present invention, the following terms have the following meanings:

- **"About",** preceding a figure, means plus or minus 10% of the value of said figure, preferably plus or minus 5% of the value of said figure. It is to be understood that the value to which "about" refers is also specifically, and preferably, disclosed.

- **"Attracting"** with regards to pests, in particular acarids, means causing pests, in particular acarids, to move from a place, where they were living, to another place, where the source of attraction is located. In one embodiment, the source of attraction is a composition comprising at least one attracting agent, *i.e.,* menthone either alone or within an essential oil such as peppermint oil, at an attracting concentration. In one embodiment, attracting does not mean repelling, immobilizing or killing.

- **"Essential oil"** refers to a concentrated hydrophobic liquid containing volatile aroma compounds extracted from plants or parts of plants (such as flowers, buds, seeds, leaves, twigs, bark, herbs, wood, fruits or roots). Typically, essential oils are obtained by methods including, without being limited to, expression of natural materials, distillation with either water or steam, and dry distillation. Following the distillation, the essential oil is physically separated from the water phase. Essential oils are highly enriched in compounds called terpenes, derived from the condensation of branched five-carbon isoprene units. An example of terpene is menthone. According to one embodiment of the present invention, the composition for attracting pests of the invention comprises menthone, wherein said menthone is comprised within an essential oil.

- **"Excipient"** refers to any and all inactive solvents, dispersion media, coatings, isotonic and absorption delaying agents and the like that can be added to a composition. Thus, in one embodiment of the invention, an excipient does not have any pest-attracting property.

- **"Foodstuff"** as used herein encompasses any substance that is used as food or to make food. Example of foodstuffs include, without being limited to, crops, cereals, fruits, vegetables, meat, cheese, dry food, and pet food.

- **"Menthone"** as used herein encompasses a compound of formula:

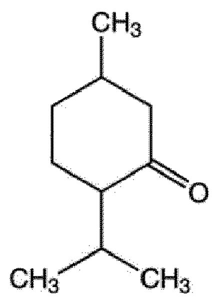

  and any stereoisomers thereof.

Thus, as used herein, "menthone" encompasses (2S,5R)-2-isopropyl-5-methylcyclohexanone (also referred to as L-menthone); (2R,5S)-2-isopropyl-5-methylcyclohexanone (also referred to as D-menthone); (2S,5S)-2-isopropyl-5-methylcyclohexanone (also referred to as L-isomenthone); and (2R,5R)-2-isopropyl-5-methylcyclohexanone (also referred to as D-isomenthone). In one embodiment, menthone is L-menthone, D-menthone, L-isomenthone, D-isomenthone, or any mixtures thereof. In one embodiment, menthone is a mixture of two stereoisomers, preferably L-menthone and D-isomenthone, or D-menthone and L-isomenthone.

- **"Pests"** as used herein encompasses acarids and insects, in particular acarids and insects that are detrimental or that cause a nuisance to humans or human concerns such as, in particular, foodstuffs, forestry, pets and livestock (including bees). According to the meaning of the invention, pests are met in houses, in gardens and/or in foodstuffs; and/or are predators or parasites of other species, in particular of humans, pets, and livestock (including bees). In one embodiment, said pests are selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera. In one embodiment, said pests are selected from the group comprising mites, ticks, ladybugs, fleas, lice, bed bugs, cockroaches and ants. In one embodiment, said pests are acarids, in particular mites.

- **"Unit dose"** refers to a dose of composition or compound prepared in an individual package and ready for use. In one embodiment, a unit dose of a composition for attracting pests comprising menthone or an essential oil comprising menthone, preferably essential oil of *Mentha piperita,* refers to the dose of composition to be applied to a support to hold pests for attracting said pests to said support.

## DETAILED DESCRIPTION

The present invention relates to a composition, a device, a kit and a method for attracting pests.

According to the present invention, the term "pests" encompasses acarids and insects, in particular acarids and insects that are detrimental or that cause a nuisance to humans or human concerns such as, in particular, foodstuffs, forestry, pets and livestock (including bees).

In one embodiment, the pests to attract according to the present invention are acarids and insects that cause a nuisance in houses, in gardens and/or to foodstuffs; and/or that are predators or parasites of other species, in particular of humans, pets, and livestock (including bees).

According to one embodiment, the pests to attract according to the present invention are selected from the group comprising or consisting of Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera.

In one embodiment, the pests to attract according to the present invention are selected from the group comprising or consisting of Acari, Cimicidae, Polyneoptera, Psocodea, Coleoptera, Siphonaptera, and Hymenoptera.

In one embodiment, the pests to attract according to the present invention are selected from the group comprising or consisting of mites, ticks, ladybugs, fleas, lice, bed bugs, cockroaches and ants.

In one embodiment, the pests to attract according to the present invention are pests causing nuisance in houses. In one embodiment, the pests to attract according to the present invention are pests causing nuisance in houses selected from the group comprising or consisting of mites (in particular dust mites and storage mites), fleas, lice, cockroaches, ladybugs and bed bugs.

In one embodiment, the pests to attract according to the present invention are pests causing nuisance in gardens. In one embodiment, the pests to attract according to the present invention are pests causing nuisance in gardens selected from the group comprising or consisting of ticks, ants and ladybugs.

In one embodiment, the pests to attract according to the present invention are pests causing nuisance to foodstuffs. In one embodiment, the pests to attract according to the present invention are pests causing nuisance to foodstuffs selected from the group comprising or consisting of mites (in particular storage mites), ants and cockroaches.

In one embodiment, the pests to attract according to the present invention are parasites of other species (in particular of humans, pets, and livestock). In one embodiment, the pests to attract according to the present invention are parasites of other species (in particular of humans, pets, and livestock) selected from the group comprising or consisting of mites (in particular parasitic mice), ticks, fleas, lice and bed bugs.

In one embodiment, the pests to attract according to the present invention are bloodsucking pests. In one embodiment, the pests to attract according to the present invention are bloodsucking pests selected from the group comprising or consisting of mites (in particular parasitic mice), ticks and bed bugs.

According to one embodiment, the pests to attract according to the present invention are Acari, also known as acarids. As used herein, the term "Acari" (or Acarina) refers to a subclass of arachnids that contains mites and ticks, also called acarids. Thus, in one embodiment, the pests to attract according to the present invention are mites and ticks.

Example of acarids include, without being limited to, *Acaropsis docta, Acaropsis sollers, Acarus sp., Acarus gracilis, Acarus griffithsi, Acarus farris, Acarus immobilis, Acarus immobilis Griffiths, Acarus indicus, Acarus rhombeus, Acarus siro, Acarus siro Linnaeus, Aeroglyphus robustus Banks, Aleuroglyphus ovatus, Aleuroglyphus ovatus Troupeau, Amblyomma americanum Linnaeus, Amblyomma cajennense Fabricius, Amblyomma hebraeum Koch, Amblyomma incisum Neumann, Amblyomma maculatum Koch, Amblyomma parvum Aragão, Amblyomma variegatum Fabricius, Amblyseius potentillae Garman, Androlaelaps casalis, Anocentor nitens Neumann, Archegozetes longisetosus Aoki, Argas persicus Oken, Argas polonicus Latreille, Argas reflexus Latreille, Austroglycyphagus geniculatus, Austroglycyphagus rodentorum, Austroglycyphagus squamulatus, Austroglycyphagus weelawadjiensis, Austroglycyphagus hugh-*

*esae, Austroglycyphagus lukoschusi, Austroglycyphagus spieksmai, Austrotritia dentata Aoki, Austrotritia ishigakiensis Aoki, Blattisocius apis, Blattisocius apisassociae, Blattisocius aegyptus, Blattisocius capsicum, Blattisocius daci, Blattisocius dentriticus, Blattisocius incisus, Blattisocius quadridentatus, Blattisocius keegani, Blattisocius tarsalis, Blomia kulagini, Blomia tjibodas, Blomia tropicalis, Boophilus microplus Canestrini, Carloglyphus berlesei, Carpoglyphus lactis Linnaeus, Chelacaropsis moorei, Cheyletomorpha lepidopterorum, Cheyletus eruditus, Cheyletus malaccesis, Chortoglyphus arcuatus, Chortoglyphus arcuatus Troupeau, Collohmannia gigantea Sellnick, Cosmoglyphus hughesi Samsinak, Dendroptus sp., Dermacentor albipictus Packard, Dermacentor andersoni Stiles, Dermacentor variabilis Say, Dermanyssus gallinae DeGeer, Dermatophagoides sp., Dermatophagoides evansi, Dermatophagoides farinae Hughes, Dermatophagoides microceras, Dermatophagoides neotropicalis, Dermatophagoides pteronyssinus Trouessart, Dermatophagoides siboney Amblyseius sp., Euroglyphus maynei, Gehypochthonius urticinus Berlese, Glycyphagus sp., Glycyphagus domesticus, Glycyphagus domesticus DeGeer, Glycyphagus privatus, Gohieria fusca, Gymnoglyphus longior, Haemaphysalis leachi Audouin, Haemaphysalis leporispalustris Packard, Haemaphysalis longicornis Neumann, Hermannia convexa C.L. Koch, Hirstia chelidonis, Hirstia domicola, Histiogaster rotundus Woodring, Histiogaster sp, Histiostoma laboratorium Hughes, Hughesiella africana, Hyalomma anatolicum excavatum Koch, Hyalomma dromedarii Koch, Hyalomma marginatum rufipes Koch, Hyalomma truncatum Koch, Hydronothrus crispus Aoki, Ixodes dammini Say, Ixodes persulcatus Schulze, Ixodes ricinus Linn, Ixodes scapularis Say, Ixodes uriae White, Kleemania plumosus, Lardoglyphus konoi Sasa* & *Asanuma, Lepidoglyphus destructor, Limnozetes ciliatus Schrank, Lorryia bedfordiensis, Malayoglyphus intermedius, Malayoglyphus carmelitus Mesotritia okuyamai Aoki, Nehypochthonius porosus Norton* & *Metz, Neoseiulus womersleyi Shicha, Nothrus palustris Koch, Oribotritia banksi Oudemans, Oribotritia berlesei Michael, Oribotritia chichijimensis Aoki, Oribotritia hermanni Grandjean, Oribotritia storkani Feider* & *Suciu, Ornithodoros erraticus Walton, Ornithodoros moubata Murray, Ornithodoros porcinus Walton, Ornithodoros tartakovskyi Olenev, Ornithodoros turicata Dugès, Ornithonyssus bacotis, Onrithonyssus syylviarums, Oulenzia sp, Parhypochthonius aphidinus Berlese, Perlohmannia sp, Phyllodromus sp., Phytoseiulus persimilis Athias-Henriot, Phytoseiulus sp., Platynothrus peltifer Koch, Pygmephorus sp., Rhipicephalus appendiculatus Neumann, Rhipicephalus compositus Neumann, Rhipicephalus evertsi Neumann, Rhipicephalus pulchellus Neumann, Rhipicephalus sanguineus Latreille, Rhipicephalus simus Koch, Rhizoglyphus robini Claparede, Rhizoglyphus setosus Manson, Rhizoglyphus sp, Sancassania polyphyllae Zakhvatkin, Sancassania rodriguezi Samsinak, Sancassania shanghaiensis, Sancassania sp, Sarcoptes scabiei Linnaeus, Scheloribates sp, Schwiebea araujoae Fain, Schwiebea elongata Banks, Schwiebea similis Manson, Suidasia medanensis, Suidasia medanensis Oudemans, Suidasia nesbitti, Steneotarsonemus sp., Sturnophagoides brasiliensis, Sturnophagoides bakeri, Sturnophagoides petrochelidonis, Tarsonemus granarius, Thyreophagus entomophagus, Tortonia sp, Trhypochthoniellus crassus Warburton* & *Pearce, Trhypochthonius japonicus Aoki, Trhypochthonius silvestris europaeus, Trhypochthonius tectorum Berlese, Typhlodromus sp., Tyreophagus sp., Tyreophagus entomophagus, Tyroborus lini Oudemans, Tyrophagus sp., Tyrophagus jacobsoni Oudemans, Tyrophagus longior Gervais, Tyrophagus neiswanderi Johnson* & *Bruce, Tyrophagus palmarum, Tyrophagus perniciosus Zakhvatkin, Tyrophagus putrescentiae, Tyrophagus putrescentiae Schrank, Tyrophagus similis Volgin, Uroactinia hirschmanni Hiramatsu, Varroa destructor, Varroa jacobsoni Oudemans, Varroa rindereri,* and *Varroa underwoodi.*

According to one embodiment, the pests to attract according to the present invention are mites. Mites are widespread and can mostly be found worldwide in foodstuffs and in dwellings. Mites cause significant nuisances, both at a domestic level and at an industrial level.

In one embodiment, the pests to attract according to the present invention are mites of the order of Acariformes.

In one embodiment, the pests to attract according to the present invention are storage mites, dust mites, and/or parasitic mites.

In one embodiment, the pests to attract according to the present invention are mites selected from the group comprising or consisting of mites of the genera *Acarus, Dermanyssus, Dermatophagoides, Lepidoglyphus, Tyrophagus,* and *Varroa.*

In one embodiment, the pests to attract according to the present invention are mites selected from the group comprising or consisting of *Acarus siro, Dermanyssus gallinae, Dermatophagoides farinae, Dermatophagoides pteronyssinus, Lepidoglyphus destructor, Tyrophagus putrescentiae* and *Varroa destructor.* In one embodiment, the pests to attract according to the present invention are mites selected from the group comprising or consisting of *Dermatophagoides farinae, Dermatophagoides pteronyssinus* and *Tyrophagus putrescentiae.*

In one embodiment, the pests to attract according to the present invention are storage mites.

Storage mites (also known as stored-product mites) thrive in foodstuffs, and in particular in grains, cereals, flour, biscuits, dry industrial foods (for example dried meat, cheese, dried fruits), dry pet food, oilseeds, edible mushrooms and beehive. They can be found in houses, mainly in kitchens, bathrooms, toilets, laundry rooms, cellars, in the interstices of floors, in storage cupboards and pantries, granaries, cane or mulched furniture, thatched roofs, and wet walls. They also thrive in barns, hay lofts, grain elevators or grain silos, ship holds, trucks carrying food, stables, pet houses, pet baskets, pet beds, pet stores, in animal rearing facilities, and at veterinary clinics. They are found in food industries as well as pulp, cigar and carpet industries, in bakeries, pastry shops, in food shops and in restaurants. Storage mites can

infect up to 40% of cereals, flours and poorly wrapped biscuits. They damage food stocks and cause significant economic losses. For example, some grain silos lose an estimated 30% of produce (Hill, 2007). Damage to grain germs can also induce germination problems (Bhargava and Kumawat, 2010). Moreover, storage mites can trigger respiratory, food and skin allergies (*e.g.,* 14.5% of employees working in the ham industry (Tafuro *et al.,* 2015), 11% to 33% of bakers (Bernstein *et al.,* 2006) and 16% of farmers (van Hage-Hamsten *et al.,* 1985) develop an allergy to storage mites). In some severe cases (for example, people allergic to mites consuming foods containing a large quantity of mite allergens), storage mites can induce an anaphylactic shock (Thind and Clark, 2001). Pets, in particular dogs and cats, are also affected by storage mites and may suffer from infestations. Such infestations may be responsible for atopic dermatitis (Colloff, 2009). Therefore, these mites are also of high veterinary importance. Finally, some storage mites are associated with the spreading of fungi (molds) in foodstuffs. Storage mites may thus increase the risk of occurrence of mycotoxins in food.

The most common species of mites found in food stocks belong to the hyporder Astigmata, such as, for example the *Tyrophagus* species (*e.g., Tyrophagus putrescentiae*), the *Acarus* species (*e.g., Acarus siro*), the *Lepidoglyphus* species (*e.g., Lepidoglyphus destructor*), and the *Glycyphagus* species (*e.g., Glycyphagus domesticus*). These mites need a warm and humid environment to grow, preferably an environment at 25-30°C with 60-90% relative humidity. In general, storage mites prefer to colonize foodstuffs of high-fat and high-protein content. Two of the most common storage mites are the mold mite (*Tyrophagus putrescentiae*) and the flour mite (*Acarus siro*).

In one embodiment, the pests to attract according to the present invention are storage mites of the family of Glycyphagidae. In another embodiment, the pests to attract according to the present invention are storage mites of the family of Acaridae.

In one embodiment, the pests to attract according to the present invention are storage mites selected from the group comprising or consisting of mites of the genera *Acarus, Lepidoglyphus* and *Tyrophagus.*

In one embodiment, the pests to attract according to the present invention are storage mites of the genus *Tyrophagus.*

In one embodiment, the pests to attract according to the present invention are storage mites selected from the group comprising or consisting of *Blomia tropicalis, Lepidoglyphus destructor, Acarus siro, Tyrophagus putrescentiae, Glycyphagus domesticus, Aleuroglyphus ovatus, Chortoglyphus arcuatus, Suidasia medanensis and Thyreophagus entomophagus.* In one embodiment, the pests to attract according to the present invention are storage mites selected from the group comprising or consisting of *Acarus siro, Tyrophagus putrescentiae, Lepidoglyphus destructor, Chortoglyphus arcuatus* and *Glycyphagus domesticus.* In one embodiment, the pests to attract according to the present invention are storage mites selected from the group comprising or consisting of *Acarus siro, Lepidoglyphus destructor,* and *Tyrophagus putrescentiae.*

In one embodiment, the pests to attract according to the present invention are *Tyrophagus putrescentiae.*

In one embodiment, the pests to attract according to the present invention are dust mites.

Dust mites (also known as "house dust mites") thrive in houses, and in particular in the environment provided by beds, sheets, blankets, pillows, mattresses, carpets, armchairs, sofas, cushions, teddy bears or padded pieces used by humans. Dust mites also develop in animal pens and pet houses, such as dog or cat baskets. Dust mites can be responsible for health problems in vertebrates, since they are susceptible to cause allergy in birds (e.g., chickens, ducks and geese), as well as in mammals, such as horses, goats, cows and pets, and in humans. Dust mites can induce allergic symptoms in humans (*e.g*., itchy watery eyes, atopic dermatitis (eczema), asthma, allergic rhinitis, persistent stuffy nose or ears), which may lead to fatal reaction in some cases. Dust mites can also be responsible for atopic dermatitis in pets, and more specifically in dogs and cats (Colloff, 2009).

The two species of dust mites mainly responsible for allergies belong to the family Pyroglyphidae. They are the European house dust mite (*Dermatophagoides pteronyssinus*) and the American house dust mite (*Dermatophagoides farinae*), both found worldwide.

In one embodiment, the pests to attract according to the present invention are dust mites of the family of Pyroglyphidae. In one embodiment, the pests to attract according to the present invention are dust mites of the genus *Dermatophagoides.*

In one embodiment, the pests to attract according to the present invention are dust mites selected from the group comprising or consisting of *Euroglyphus maynei, Dermatophagoides siboney, Dermatophagoides microceras, Gymnoglyphus longior, Dermatophagoides pteronyssinus* (the European dust mite) and *Dermatophagoides farinae* (the American dust mite). It will be understood that, while the terms European and American generally refer to the geographic origin or prevalence of these mites, said mites are not exclusively confined to Europe or North America, respectively.

In one embodiment the pests to attract according to the present invention are dust mites selected from the group comprising or consisting of *Dermatophagoides pteronyssinus* (the European dust mite) and *Dermatophagoides farinae* (the American dust mite). In one embodiment, the pests to attract according to the present invention are *Dermatophagoides pteronyssinus.* In another embodiment, the pests to attract according to the present invention are *Dermatophagoides farinae.*

In one embodiment, the pests to attract according to the present invention are parasitic mites.

Parasitic mites infest other species, from insects such as bees to vertebrates such as birds or rodents, and can thus cause significant nuisance, such as, for example, decrease in livestock. Moreover, parasitic mites can also occasionally infest buildings associated with wild or domestic birds or rodents. Similarly, parasitic mites can also occasionally be detrimental to humans in contact with infested animals, such as birds or rodents. For example, they can be responsible for itching dermatitis.

Examples of parasitic mites include, without being limited to, mites of the genus *Varroa* which attack honey bees and mites of the genus *Dermanyssus* which infest birds, in particular poultry.

Examples of mites of the genus *Varroa* include *Varroa destructor, Varroa jacobsoni, Varroa rindereri* and *Varroa underwoodi. Varroa* mites can only reproduce in a honey bee colony. They attach to the body of a bee and weaken the bee by sucking its hemolymph. The bee disease caused by these mites is called varroosis and a significant mite infestation can lead to the death of a honey bee colony. *Varroa* mites are thus considered a crucial factor in the decreasing numbers of beekeepers and honey bee colonies in Europe.

Examples of mites of the genus *Dermanyssus* include *Dermanyssus gallinae, Dermanyssus hirundinis, Dermanyssus lacertarum* and *Dermanyssus quintus. Dermanyssus* mites infest different species of birds including notably poultry, game birds, aviary birds and wild birds. In particular, *Dermanyssus gallinae* causes irritation, anemia, general deterioration of health and in some cases even death and great reduction in egg production. Thus, these mites may cause important economic losses for breeders. *Dermanyssus* mites may also be a vector of several significant bird diseases. They are linked to different poultry pathogens such as St-Louis encephalitis virus, chicken pox virus, newcastle virus, the agent of pullorum disease and fowl typhoid, and the agent of fowl veterinary parasitology.

In one embodiment, the pests to attract according to the present invention are parasitic mites selected from the group comprising or consisting of mites of the genera *Dermanyssus* and *Varroa.*

In one embodiment, the pests to attract according to the present invention are parasitic mites of the genus *Dermanyssus.* In another embodiment, the pests to attract according to the present invention are parasitic mites of the genus *Varroa.*

In one embodiment, the pests to attract according to the present invention are parasitic mites selected from the group comprising or consisting of *Dermanyssus gallinae* and *Varroa destructor.*

According to one embodiment, the pests to attract according to the present invention are ticks.

Ticks are parasites living by feeding on the blood of vertebrates and can be found in almost every region of the world. Ticks are currently considered to be second only to mosquitoes as vectors of human infectious diseases in the world. For example, ticks can cause Lyme disease, severe toxic conditions such as paralyses and toxicoses, irritation and allergy. Moreover, diseases transmitted by ticks to livestock constitute a major factor which limits animal production.

Example of ticks include, without being limited to, *Amblyomma americanum Linnaeus, Amblyomma cajennense Fabricius, Amblyomma hebraeum Koch, Amblyomma incisum Neumann, Amblyomma maculatum Koch, Amblyomma parvum Aragao, Amblyomma variegatum Fabricius, Amblyomma tuberculatum, Amblyseius potentillae Garman, Anocentor nitens Neumann, Argas persicus Oken, Argas polonicus Latreille, Argas reflexus Latreille, Boophilus annulatus, Boophilus microplus Canestrini, Dermacentor albipictus Packard, Dermacentor andersoni Stiles, Dermacentor marginatus, Dermacentor reticulatus, Dermacentor variabilis Say, Haemaphysalis leachi Audouin, Haemaphysalis leporispalustris Packard, Haemaphysalis longicornis Neumann, Hyalomma anatolicum excavatum Koch, Hyalomma dromedarii Koch, Hyalomma marginatum rufipes Koch, Hyalomma truncatum Koch, Ixodes dammini Say, Ixodes gregsoni, Ixodes hexagonus, Ixodes persulcatus Schulze, Ixodes ricinus Linn, Ixodes scapularis Say, Ixodes uriae White, Nothrus palustris Koch, Ornithodoros erraticus Walton, Ornithodoros moubata Murray, Ornithodoros porcinus Walton, Ornithodoros tartakovskyi Olenev, Ornithodoros turicata Dugès, Ornithonyssus bacotis, Onrithonyssus syylviarums, Rhipicephalus compositus Neumann, Rhipicephalus evertsi Neumann, Rhipicephalus pulchellus Neumann, Rhipicephalus sanguineus Latreille, Rhipicephalus simus Koch,* and *Rhipicephalus appendiculatus.*

In one embodiment, the pests to attract according to the present invention are ticks selected from the group comprising or consisting of *Amblyomma americanum, Amblyomma hebraeum, Argas persicus, Boophilus microplus, Dermacentor andersoni, Hyalomma marginatum, Ixodes hexagonus, Ixodes ricinus, Ixodes gregsoni, Otobius megnini, Rhipicephalus appendiculatus,* and *Rhipicephalus sanguineus.*

In one embodiment, the pests to attract according to the present invention are ticks selected from the group comprising or consisting of *Amblyomma americanum, Boophilus microplus, Ixodes hexagonus, Ixodes ricinus, Hyalomma marginatum, Rhipicephalus appendiculatus,* and *Rhipicephalus sanguineus.*

According to one embodiment, the pests to attract according to the present invention are insects selected from the group comprising or consisting of Cimicidae, Neuropterida, Thysanoptera, Psocodea, Polyneoptera, Paleoptera, Coleoptera, Strepsiptera, Mecoptera, Trichoptera, Siphonaptera, and Hymenoptera.

In one embodiment, the pests to attract according to the present invention are insects selected from the group comprising or consisting of Cimicidae, Polyneoptera, Psocodea, Coleoptera, Siphonaptera, and Hymenoptera.

As used herein, the term "insects" refers to hexapod invertebrates, which belong to the arthropod phylum, and

have a body divided into three parts (head, thorax, and abdomen) and three pairs of legs.

In one embodiment, the pests to attract according to the present invention are insects selected from the group comprising or consisting of ladybugs, fleas, lice, bed bugs, cockroaches and ants.

In one embodiment, the pests to attract according to the present invention are Cimicidae. Examples of Cimicidae include, without being limited to, bed bugs.

In one embodiment, the pests to attract according to the present invention are bed bugs.

In one embodiment, the pests to attract according to the present invention are Neuropterida. Examples of Neuropterida include, without being limited to, lacewings and mantidflies.

In one embodiment, the pests to attract according to the present invention are Thysanoptera. Examples of Thysanoptera include, without being limited to, thrips.

In one embodiment, the pests to attract according to the present invention are Psocodea. Examples of Psocodea include, without being limited to, lice such as human lice, canine chewing lice, bark lice, and book lice.

In one embodiment, the pests to attract according to the present invention are lice.

In one embodiment, the pests to attract according to the present invention are Polyneoptera. Examples of Polyneoptera include, without being limited to, cockroaches, termites, and earwigs.

In one embodiment, the pests to attract according to the present invention are cockroaches.

In one embodiment, the pests to attract according to the present invention are Paleoptera (also known as Palaeoptera). Examples of Paleoptera include, without being limited to, mayflies and dragonflies.

In one embodiment, the pests to attract according to the present invention are Coleoptera. Examples of Coleoptera include, without being limited to, ladybugs, weevils, flour beetles, mealworms, grain beetles, grain borers, drugstore beetles, corn rootworms, rose chafers, leaf beetles, chafers, and long-horned beetles.

In one embodiment, the pests to attract according to the present invention are ladybugs.

In one embodiment, the pests to attract according to the present invention are Strepsiptera. Examples of Strepsiptera include, without being limited to, stylopidae.

In one embodiment, the pests to attract according to the present invention are Mecoptera. Examples of Mecoptera include, without being limited to, scorpionflies and hangingflies.

In one embodiment, the pests to attract according to the present invention are Trichoptera. Examples of Trichoptera include, without being limited to, caddisflies.

In one embodiment, the pests to attract according to the present invention are Siphonaptera. Examples of Siphonaptera include, without being limited to, fleas.

In one embodiment, the pests to attract according to the present invention are fleas.

In one embodiment, the pests to attract according to the present invention are Hymenoptera. Examples of Hymenoptera include, without being limited to, ants, sawflies, and wasps.

In one embodiment, the pests to attract according to the present invention are ants.

The present invention relates to a composition for attracting pests as described hereinabove comprising menthone. The present invention also relates to a composition for attracting pests as described hereinabove consisting essentially of menthone.

According to one embodiment, the composition for attracting pests of the invention is a liquid composition.

An object of the invention is thus the use of a composition comprising menthone for attracting pests as described hereinabove. Another object of the invention is the use of a composition consisting essentially of menthone for attracting pests as described hereinabove. Another object of the invention is the use of menthone for attracting pests as described hereinabove.

According to the present invention, unless stated otherwise, the term "menthone" encompasses a compound of formula:

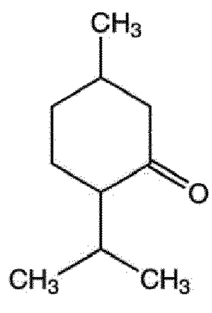

and any stereoisomers thereof.

There are four possible stereoisomers of menthone: (2S,5R)-2-isopropyl-5-methylcyclohexanone (also referred

to as L-menthone); (2R,5S)-2-isopropyl-5-methylcyclohexanone (also referred to as D-menthone); (2S,5S)-2-isopropyl-5-methylcyclohexanone (also referred to as L-isomenthone); and (2R,5R)-2-isopropyl-5-methylcyclohexanone (also referred to as D-isomenthone); with L-menthone being the most abundant in nature of the four possible stereoisomers.

In one embodiment, the menthone is L-menthone, D-menthone, L-isomenthone, D-isomenthone, or any mixtures thereof. Thus, in one embodiment, the composition for attracting pests of the invention is a composition comprising L-menthone, D-menthone, L-isomenthone, D-isomenthone, or any mixtures thereof.

In one embodiment, the composition for attracting pests of the invention is a composition comprising L-menthone.

In one embodiment, the term "menthone" corresponds to a mixture of two stereoisomers, preferably L-menthone and D-isomenthone, or D-menthone and L-isomenthone. Thus, in one embodiment, the composition for attracting pests of the invention is a composition comprising menthone as a mixture of L-menthone and D-isomenthone, or menthone as a mixture of D-menthone and L-isomenthone.

According to one embodiment, the composition for attracting pests of the invention comprises menthone as described hereinabove at a concentration ranging from about $10^{-15}$ L/L to about $10^{-1}$ L/L.

In one embodiment, the composition for attracting pests, in particular acarids, of the invention comprises menthone as described hereinabove at a concentration ranging from about $10^{-7}$ L/L to about $10^{-5}$ L/L, preferably from about $5.10^{-7}$ L/L to about $5.10^{-6}$ L/L.

In one embodiment, the composition for attracting pests, in particular acarids, of the invention comprises menthone as described hereinabove at a concentration of about $5.10^{-7}$, $6.10^{-7}$, $7.10^{-7}$, $8.10^{-7}$, $9.10^{-7}$, $10^{-6}$, $2.10^{-6}$, $3.10^{-6}$, $4.10^{-6}$, or $5.10^{-6}$ L/L, preferably of about $10^{-6}$ L/L.

In one embodiment, the composition for attracting pests of the invention comprises menthone as described hereinabove at a concentration ranging from about $10^{-12}$ mg/mL to about 100 mg/mL.

In one embodiment, the composition for attracting pests, in particular acarids, of the invention comprises menthone as described hereinabove at a concentration ranging from about $10^{-4}$ mg/mL to about $10^{-2}$ mg/mL, preferably from about $5.10^{-4}$ mg/mL to about $5.10^{-3}$ mg/mL.

In one embodiment, the composition for attracting pests, in particular acarids, of the invention comprises menthone as described hereinabove at a concentration of about $5.10^{-4}$, $6.10^{-4}$, $7.10^{-4}$, $8.10^{-4}$, $9.10^{-4}$, $10^{-3}$, $2.10^{-3}$, $3.10^{-3}$, $4.10^{-3}$, or $5.10^{-3}$ mg/mL, preferably of about $9.10^{-4}$ mg/mL.

In one embodiment, the composition for attracting pests of the invention comprises menthone as described hereinabove at a concentration ranging from about $6.10^{-12}$ mM to about 600 mM.

In one embodiment, the composition for attracting pests, in particular acarids, of the invention comprises menthone as described hereinabove at a concentration ranging from about 0.6 $\mu$M to about 60 $\mu$M, preferably from about 1 $\mu$M to about 10 $\mu$M.

In one embodiment, the composition for attracting pests, in particular acarids, of the invention comprises menthone as described hereinabove at a concentration of about 1, 2, 3, 4, 5, 6, 7, 8, 9 or 10 $\mu$M, preferably of about 6 $\mu$M.

In accordance with the definition of menthone according to the present invention, the concentration of menthone in the composition as described hereinabove corresponds to the total concentration of all the stereoisomer(s) of menthone that may be present in said composition. Thus, the concentration of menthone in the composition as described hereinabove of the invention encompasses the concentration of isomenthone, in particular of D-isomenthone, that may be present in said composition.

According to one embodiment, the composition for attracting pests of the invention comprises menthone as described hereinabove wherein said menthone is comprised within an essential oil. In other words, according to one embodiment, the composition for attracting pests of the invention comprises an essential oil, said essential oil comprising menthone as described hereinabove.

Thus, an object of the invention is a composition for attracting pests as described hereinabove comprising an essential oil, said essential oil comprising menthone as described hereinabove. The present invention also relates to a composition for attracting pests as described hereinabove consisting essentially of an essential oil, said essential oil comprising menthone as described hereinabove.

Another object of the invention is the use of a composition comprising an essential oil for attracting pests as described hereinabove, said essential oil comprising menthone as described hereinabove. Another object of the invention is the use of a composition consisting essentially of an essential oil for attracting pests as described hereinabove, said essential oil comprising menthone as described hereinabove. Another object of the invention is the use of an essential oil comprising menthone as described hereinabove for attracting pests as described hereinabove.

According to the present invention, the term "essential oils" refers to concentrated hydrophobic liquids containing volatile aroma compounds extracted from plants or parts of plants (such as flowers, buds, seeds, leaves, twigs, bark, herbs, wood, fruits or roots). Typically, essential oils are obtained by distillation with either water or steam, by dry distillation, or by expression of natural materials. Following the distillation, the essential oil is physically separated from the water phase. Essential oils are highly enriched in compounds called terpenes, derived from the condensation of

branched five-carbon isoprene units. An example of terpene is menthone.

Another object of the invention is the use of mint leaves from which an essential oil comprising menthone as described hereinabove is extracted for attracting pests as described hereinabove.

In one embodiment, the essential oil comprising menthone as described hereinabove is selected from the group comprising or consisting of essential oils of *Mentha piperita, Mentha arvensis, Mentha canadensis, Mentha cervina, Mentha pulegium, Mentha aquatica, Mentha pulegioides, Mentha longifolia,* and any mixtures thereof.

In one embodiment, the essential oil comprising menthone as described hereinabove is selected from the group comprising or consisting of essential oils of *Mentha piperita, Mentha arvensis, Mentha canadensis, Mentha cervina,* and any mixtures thereof.

In one embodiment, the essential oil comprising menthone as described hereinabove comprises at least about 1, 2, 3, 4, 5, 6, 7, 8, 9, or 10% of menthone (with respect to the total composition of the essential oil).

In one embodiment, the essential oil comprising menthone as described hereinabove is the essential oil of *Mentha piperita* also known as peppermint oil.

Thus, in one embodiment, the composition for attracting pests of the invention comprises menthone as described hereinabove wherein said menthone is comprised within essential oil of *Mentha piperita*. Accordingly, in one embodiment, the composition for attracting pests of the invention comprises essential oil of *Mentha piperita,* said essential oil comprising menthone as described hereinabove.

Thus, an object of the invention is a composition for attracting pests as described hereinabove comprising essential oil of *Mentha piperita.* The present invention also relates to a composition for attracting pests as described hereinabove consisting essentially of essential oil of *Mentha piperita*.

Another object of the invention is the use of a composition comprising essential oil of *Mentha piperita* for attracting pests as described hereinabove. Another object of the invention is the use of a composition consisting essentially of essential oil of *Mentha piperita* for attracting pests as described hereinabove. Another object of the invention is the use of essential oil of *Mentha piperita* for attracting pests as described hereinabove.

Essential oil of *Mentha piperita* is obtained from *Mentha piperita* of the Lamiaceae (or Labiatae) family, commonly known as the mint family, a sterile hybrid of the species *Mentha aquatica* and *Mentha spicata*. Typically, essential oil of *Mentha piperita* is extracted by steam distillation from aerial parts of the plant, fresh or partly dried.

According to the present invention, essential oil of *Mentha piperita* comprises menthone as described hereinabove. According to one embodiment, other main constituents of essential oil of *Mentha piperita* further comprises at least one of menthol, 1,8-cineole (also known as eucalyptol), menthofuran, menthyl acetate, limonene, pulegone and carvone. In one embodiment, essential oil of *Mentha piperita* comprises menthone, menthol, 1,8-cineole (also known as eucalyptol), menthofuran, menthyl acetate, limonene, pulegone and carvone.

In one embodiment, essential oil of *Mentha piperita* comprises L-menthone, D-menthone, L-isomenthone, D-isomenthone, or any mixtures thereof.

In one embodiment, essential oil of *Mentha piperita* comprises menthone as a mixture of L-menthone and D-isomenthone, or menthone as a mixture D-menthone and L-isomenthone.

In one embodiment, essential oil of *Mentha piperita* comprises at least about 5, 6, 7, 8, 9, 10, 11, 12, 13, 14, or 15% of menthone (with respect to the total composition of the essential oil of *Mentha piperita*).

In one embodiment, essential oil of *Mentha piperita* comprises from about 5% to about 60% of menthone, preferably from about 10% to about 55% of menthone, more preferably from about 12% to about 45% of menthone (with respect to the total composition of the essential oil of *Mentha piperita*).

In accordance with the definition of menthone according to the present invention, the concentration of menthone in the essential oil of *Mentha piperita* as described hereinabove corresponds to the total concentration of all the stereoisomer(s) of menthone that may be present in said essential oil of *Mentha piperita.* Thus, the concentration of menthone in the essential oil of *Mentha piperita* as described hereinabove of the invention encompasses the concentration of isomenthone, in particular of D-isomenthone, that may be present in said essential oil of *Mentha piperita.*

According to one embodiment, the composition for attracting pests of the invention comprises an essential oil comprising menthone as described hereinabove, preferably essential oil of *Mentha piperita,* wherein the concentration of said essential oil in the composition ranges from about $10^{-15}$ L/L to about $10^{-1}$ L/L.

In one embodiment, the composition for attracting pests, in particular acarids, of the invention comprises an essential oil comprising menthone as described hereinabove, preferably essential oil of *Mentha piperita,* wherein the concentration of said essential oil in the composition ranges from about $10^{-7}$ L/L to about $10^{-4}$ L/L, preferably from about $5.10^{-6}$ L/L to about $5.10^{-4}$ L/L.

In one embodiment, the composition for attracting pests, in particular acarids, of the invention comprises an essential oil comprising menthone as described hereinabove, preferably essential oil of *Mentha piperita,* wherein the concentration of said essential oil in the composition is about $5.10^{-7}$, $6.10^{-7}$, $7.10^{-7}$, $8.10^{-7}$, $9.10^{-7}$, $10^{-6}$, $2.10^{-6}$, $3.10^{-6}$, $4.10^{-6}$, $5.10^{-6}$, $6.10^{-6}$, $7.10^{-6}$, $8.10^{-6}$, $9.10^{-6}$, $10^{-5}$, $2.10^{-5}$, $3.10^{-5}$, $4.10^{-5}$, or $5.10^{-5}$ L/L.

In one embodiment, the composition for attracting pests of the invention comprises an essential oil comprising

menthone as described hereinabove, preferably essential oil of *Mentha piperita,* wherein the concentration of said essential oil in the composition ranges from about $10^{-12}$ mg/mL to about 100 mg/mL.

In one embodiment, the composition for attracting pests, in particular acarids, of the invention comprises an essential oil comprising menthone as described hereinabove, preferably essential oil of *Mentha piperita,* wherein the concentration of said essential oil in the composition ranges from about $10^{-4}$ mg/mL to about $10^{-1}$ mg/mL, preferably from about $5.10^{-4}$ mg/mL to about $5.10^{-2}$ mg/mL.

In one embodiment, the composition for attracting pests, in particular acarids, of the invention comprises an essential oil comprising menthone as described hereinabove, preferably essential oil of *Mentha piperita,* wherein the concentration of said essential oil in the composition is about $5.10^{-4}$, $6.10^{-4}$, $7.10^{-4}$, $8.10^{-4}$, $9.10^{-4}$, $10^{-3}$, $2.10^{-3}$, $3.10^{-3}$, $4.10^{-3}$, $5.10^{-3}$, $6.10^{-3}$, $7.10^{-3}$, $8.10^{-3}$, $9.10^{-3}$, $10^{-2}$, $2.10^{-2}$, $3.10^{-2}$, $4.10^{-2}$, or $5.10^{-2}$ mg/mL.

According to one embodiment, the composition for attracting pests of the invention further comprises at least one additional attracting agent. In one embodiment, the composition for attracting pests of the invention comprises menthone as described hereinabove and at least one additional attracting agent. In another embodiment, the composition for attracting pests of the invention comprises an essential oil comprising menthone as described hereinabove and at least one additional attracting agent. In another embodiment, the composition for attracting pests of the invention comprises essential *oil of Mentha piperita* as described hereinabove and at least one additional attracting agent.

In one embodiment, the at least one additional attracting agent is selected from the group comprising or consisting of tartaric acid, lavender oil, linseed oil,octen-3-ol, acetic acid, 3,7-dimethylocta-2,6-dienal, limonene, pinene, propylene glycol, undecane, decanal, dodecane, lavandulol, tween, fucose, heptan-2-one, octan-2-one, nonan-2-one, 8-nonen-2-one, palmitic acid, methyl palmitate, stearic acid, methyl stearate, oleic acid, methyl oleate, linoleic acid, methyl linoleate, linolenic acid, myristic acid, pentadecanoic acid, margaric acid, 1E5-octadien-3-ol, beta-acaridial, carotene, riboflavin, rutine, beta D-glucose, D-mannitol, D-ribose, D-arabitanol, oct-1-en-3-ol, ascorbic acid, 1,3-dimethoxybenzene, undecanal, dodecan-2-one, tridecanoic acid, tridecane, 7-methyltetradecane, pentadecane, heptadecane, nonadecanoic acid, (E,E)-4,8,12-trimethyl-1,3,7,11-tridecatetraene, (E)-1,5-octadien-3-ol, 1-methylpiperidin-2-one, (1R,3R,5R,7R)-1,3,5,7-tetramethyldecyl formate, (Z)-1,5-octadien-3-ol, (Z,Z)-1,6,9-heptadecatriene, 2,3-dihydroxybenzaldehyde, 2,6-di-t-butyl-4-methylphenol, pentacosane, heptacosane, nonacosene, 2,6-dibromophenol, 2,4,6-trichlorophenol, 2,4-dichlorophenol, 2,6-dichlorophenol, 2,6-dimethyl-(E)-2,6,8-nonatriene, 2-hydroxy-6-methylbenzaldehyde, 2-methylpropan-1-ol, 2-methylbutan-1-ol, 2,6-dimethyl-2,5-heptadiene-4-one, 2-methyl acetophenone, 2-methyl benzaldehyde, 2-methyl benzoic acid, 2-methoxy-3-methyl-1,4-benzoquinone, 2-nitrophenol, (2R,3R)-2,3-epoxy-3,7-dimethyl-6-octenal, 3,4-dehydrocineole, 3-ethyl benzaldehyde, 3-ethylphenol, 3-isopropyl-6-methyl benzaldehyde, 3-methylbutan-1-ol, 3-methylbenzaldehyde, propan-1-ol, 3S8S-chrysomelidial, (4aS,7S,7aR)-tetrahydro-4,7-dimethylcyclopenta[c]pyranone, (4aS,7S,7aS)-tetrahydro-4,7-dimethylcyclopenta[c]pyranone, dihydro-5-propylfuran-2(3H)-one, 4-hydroxy-2-methyl benzaldehyde, (5S,8S)-2-methyl-5-(1-formylethyl)-1-cyclopentene-1-carbaldehyde, (Z,Z)-5,9-octadecadienoic acid, hexanal, 6-ethyl benzaldehyde, 6-methyl salicylic acid, heptanal, 7-hydroxy-3H-isobenzofuran-1-one, 7-methyl-5-hydroxy-1,4-naphthoquinone, octanal, octan-1-ol, nonanal, 1-phenylethanone, adenine, 3-(4-methyl-3-pentenyl)-2(5H)-furanone, 4-(4-methyl-3-pentenyl)-2(5H)-furanone, (E)-2-(4-methyl-3-pentenyl)-butenedial, (E)-2-(2-hydroxyethylidene)-6-methyl-5-heptena, 2-(4-methylcyclohex-3-enyl)-propan-2-ol, ammonia, eicosanoic acid, aromatic attractants such as oils and fats, their esters with fatty acids, benzaldehyde, (E)-2-(4-methyl-3-pentenylidene)-butanedial, (E)-2-(2-hydroxyethyl)-6-methyl-2,5-heptadienal, 1R-(1R,4E,9S)-4,11,11-trimethyl-8-methylenebicyclo[7.2.0]undec-4-ene, (E,E)-7,11,15-trimethyl-3-methylene-1,6,10,14-hexadecatetraene, butyric acid and alcohols, C4-12 aliphatic ketones, C4-14 aliphatic lactones, C7-10 linear aliphatic aldehydes, decanoic acid, octanoic acid, cholest-5-en-3beta-ol, (4R,6R,8R)-4,6,8-trimethyldecan-2-one, (Z)-3,7,11-trimethyl-1,6,10-dodecatrien-3-ol, carbon dioxide, (24S)-24-methylcholesta-5,22(E)-dien-3beta-ol, N,N-diethyl-3-methylbenzamide, 1-tridecene, 1-pentadecene, 1-heptadecene, 1-nonadecene, 1-eicosenal, 4-heptadecene, 6,9-heptadecadiene, 8-heptadecene, 9,17-octadecadienal, N,N-diethyl-2,5-dimethylbenzamide, (E,E,E)-3,7,11,15-tetramethylhexadeca-1,3,6,10,14-pentaene, (E,E)-3,7,11-trimethyl-2,6,10-dodecatrienal, (E)-4,8-dimethyl-1,3,7-nonatriene, (E)-9-octadecenoic acid, (3S,8R)-2-methyl-5-(1-formylethyl)-1-cyclopentene-1-carbaldehyde, ester-based food aroma additives such as geranyl, esters of aromatic attractants such as oils and fats, ethanol, ethyl hexadecanoate, ethyl-Z2E4-decadienoate, formic acid, 3-hydroxybenzene-1,2-dicarbaldehyde, dihydro-5-methylfuran-2(3H)-one, (E)-3,7-dimethyl-2,6-octadienal, (E)-3,7-dimethyl-2,6-octadien-1-ol, (E)-3,7-dimethyl-2,6-octadienyl formate, (E,E)-3,7,11,15-tetramethyl-1,6,10,14-hexadecatetraene-3-ol, guanine, guanine, heptadecadiene, (Z,Z)-hexyl-9,12-octadecadienoate, hexyl 2-formyl-3-hydroxybenzoate, hexyl stearate, hypoxanthine, isobutyric acid, (S)-3-methyl-6-isopropenyl-2-cyclohexen-1-one, 4S-4-isopropenyl-3-oxo-1-cyclohexene-1-carboxyaldehyde, 1,3,5,7-tetramethyldecyl formate, dodecanoic acid, 2,6-dimethyl-2,7-octadien-6-ol, (Z,Z)-9,12-octadecadienoic acid, (Z,Z,Z)-9,12,15-octadecatrienoic acid, heptadecanoic acid, methyl 2-methoxybenzoate, methyl 3-chloro-4-methoxybenzoate, methyl heptadecanoate , (Z,Z)-9,12-octadecadienoic acid methyl ester, (Z,Z,Z)-9,12,15-octadecatrienoic acid methyl ester, methyl octadecanoate, (Z)-9-octadecenoic acid methyl ester, methyl hexadecanoate, methyl (Z)-9-hexadecenoate, methyl salicylate, octadecanoic acid methyl ester, methyl tetradecanoate, (E)-methyl 2-methylbutenoate, tetradecanoic acid, neral, (Z)-3,7-dimethyl-2,6-octadien-1-ol, (Z)-3,7-dimethyl-2,6-octadienyl formate, 2-bromophenol,

2-chlorophenol, octadecenoic acid, C4-18 fatty acid and esters of these fatty acids, (Z)-9-octadecenoic acid, olein, hexadecanoic acid, 4-methylphenol, nonanoic acid, pentadecanoic acid, 3-(4-methyl-3-pentenyl)-furan, phenol, (Z,Z,Z)-5,9,12-octadecatrienoic acid, 5-hydroxy-2-methyl-1,4-naphthoquinone, (R)-2,6-dimethyl-5-heptenal, (R)-2,6-dimethyl-5-hepten-1-ol, 2-formyl-3-hydroxybenzyl formate, 3-oxo-4-isopropylidene-1-cyclohexene-1-carboxyaldehyde, 3-methyl-2-(3-methylbut-2-enyl)-furan, (S,S)-2,4-dimethylhexan-1-ol, (S,S)-2,4-dimethylheptan-1-ol, (S)-2-methylpentan-1-o, salicylaldehyde, 4S-4-isopropenyl-3-oxo-1-cyclohexene-1-carboxyaldehyde, (6E,10E,14E,18E)-2,6,10,15,19,23-hexamethyl-2,6,10,14,18,22-tetracosahexaene, octadecanoic acid, (E)-3,7-dimethyl-1,3,6-octatriene, xanthine, (Z,E)-3,7,11-trimethyl-2,6,10-dodecatrienal, (Z,Z)-4,8-heptadecadiene, (Z,Z,Z)-4,8,11-heptadecatriene, (Z)-5-tridecene, (Z)-6-tetradecene, (Z)-6-pentadecene, (Z,Z)-6,9-heptadecadiene, (Z)-7-tetradecene, (Z)-7-pentadecene, (Z)-7-heptadecene, (Z)-7-heptadecene, or mixtures thereof.

In one embodiment, the at least one additional attracting agent is selected from the group comprising or consisting of tartaric acid, lavender oil, linseed oil, octen-3-ol, acetic acid, 3,7-dimethylocta-2,6-dienal, limonene, pinene, propylene glycol, undecane, decanal, dodecane, lavandulol, tween, and fucose.

In one embodiment, the at least one additional attracting agent is selected from the group comprising or consisting of tartaric acid, lavender oil, linseed oil, octen-3-ol and acetic acid.

In one embodiment, the composition of the invention for attracting pests as described hereinabove does not comprise essential oil of *Mentha piperita* or essential oil of *Mentha arvensis* together with lavandulol. In one embodiment, the composition of the invention for attracting pests as described hereinabove does not comprise essential oil of *Mentha piperita* or essential oil of *Mentha arvensis* together with fucose.

According to one embodiment, the composition for attracting pests as described hereinabove further comprises at least one pesticide, *i.e.,* at least one agent killing pests.

In one embodiment, the composition for attracting pests as described hereinabove further comprises at least one pesticide in an amount sufficient to kill pests.

In one embodiment, the composition of the invention for attracting pests as described hereinabove does not comprise menthone in an amount sufficient to kill pests. In one embodiment, the composition of the invention for attracting pests as described hereinabove does not comprise essential oil of *Mentha piperita* in an amount sufficient to kill pests.

In one embodiment, the pesticide is an acaricide, *i.e.*, an agent killing acarids. Thus, in one embodiment, the composition for attracting pests as described hereinabove further comprises at least one acaricide in an amount sufficient to kill acarids.

In one embodiment, the composition of the invention for attracting pests as described hereinabove does not comprise menthone in an amount sufficient to kill acarids. In one embodiment, the composition of the invention for attracting pests as described hereinabove does not comprise essential oil of *Mentha piperita* in an amount sufficient to kill acarids.

In one embodiment, the pesticide is an insecticide, *i.e.,* an agent killing insects. Thus, in one embodiment, the composition for attracting pests as described hereinabove further comprises at least one insecticide in an amount sufficient to kill insects.

In one embodiment, the composition of the invention for attracting pests as described hereinabove does not comprise menthone in an amount sufficient to kill insects. In one embodiment, the composition of the invention for attracting pests as described hereinabove does not comprise essential oil of *Mentha piperita* in an amount sufficient to kill insects.

According to one embodiment, the composition for attracting pests as described hereinabove further comprises at least one excipient. In one embodiment, the composition for attracting pests of the invention comprises menthone as described hereinabove, optionally at least one additional attracting agent, optionally at least pesticide, and at least one excipient. In another embodiment, the composition for attracting pests of the invention comprises an essential oil comprising menthone as described hereinabove, optionally at least one additional attracting agent, optionally at least pesticide, and at least one excipient. In another embodiment, the composition for attracting pests of the invention comprises essential oil of *Mentha piperita* as described hereinabove, optionally at least one additional attracting agent, optionally at least pesticide, and at least one excipient.

In one embodiment, the excipient may be a solvent, a stabilizer, an emulsifier and/or a perfume. Thus, in one embodiment, the composition for attracting pests of the invention comprises menthone as described hereinabove; optionally at least one additional attracting agent; optionally at least pesticide; and at least one solvent, at least one stabilizer, at least one emulsifier, and/or at least one perfume. In another embodiment, the composition for attracting pests of the invention comprises an essential oil comprising menthone as described hereinabove; optionally at least one additional attracting agent; optionally at least pesticide; and at least one solvent, at least one stabilizer, at least one emulsifier, and/or at least one perfume. In another embodiment, the composition for attracting pests of the invention comprises essential oil of *Mentha piperita* as described hereinabove; optionally at least one additional attracting agent; optionally at least pesticide; and at least one solvent, at least one stabilizer, at least one emulsifier, and/or at least one perfume.

In one embodiment, said at least one solvent is selected from the group comprising nonpolar solvents (such

as pentane), polar aprotic solvents (such as acetone) and polar protic solvents (such as water, butanol and the like).

In one embodiment, said at least one solvent is water. In another embodiment, said at least one solvent is an oil, such as, for example, paraffin oil.

In one embodiment, said at least one stabilizer is selected from the group comprising antioxidants, such as glutathione, vitamin A and vitamin E; and sequestrants, such as calcium disodium ethylene diamine tetra-acetate (E385), glucono delta-lactone (E575), sodium gluconate (E576), potassium gluconate (E577), sodium tripolyphosphate, and sodium hexametaphosphate (E452i).

In one embodiment, said at least one emulsifier is an anionic surfactant containing anionic functional groups, such as sulfate, sulfonate, phosphate, and carboxylates. Examples of surfactants with prominent alkyl sulfates include, without being limited to, ammonium lauryl sulfate, sodium lauryl sulfate (also known as sodium dodecyl sulfate or SDS), the related alkyl-ether sulfates sodium laureth sulfate (also known as sodium lauryl ether sulfate (SLES)), sodium myreth sulfate, docusate (also known as dioctyl sodium sulfosuccinate), perfluorooctanesulfonate (PFOS), perfluorobutane sulfonate, and linear alkylbenzene sulfonates (LABs) (including alkyl-aryl ether phosphates and alkyl ether phosphate). Examples of surfactants with carboxylates include, without being limited to, alkyl carboxylates (*e.g.*, sodium stearate), sodium lauroyl sarcosinate and carboxylate-based fluorosurfactants such as perfluorononanoate and perfluorooctanoate (PFOA or PFO). In another embodiment, said at least one emulsifier is a non-ionic surfactant. Examples of non-ionic surfactants include, without being limited to, polyoxyethylene glycol alkyl ethers, polyoxypropylene glycol alkyl ethers, polyoxyethylene glycol octylphenol ethers, polyoxyethylene glycol alkylphenol ethers, glycerol alkyl esters, polyoxyethylene glycol, cocamide MEA, cocamide DEA, dodecyldimethylamine oxide, and block copolymers of polyethylene glycol and polypropylene glycol (e.g., poloxamers or polyethoxylated tallow amine (POEA)).

Examples of perfumes include, without being limited to, essential oils of *Cymbopogon citratus, Cymbopogon winterianus, Cymbopogon nardus, Cymbopogon martinii, Cymbopogon giganteus, Cymbopogon schoenanthus, Eucalyptus radiata, Eucalyptus camaldulensis, Eucalyptus globulus, Eucalyptus cordata, Eucalyptus deglupta, Eucalyptus gundal, Eucalyptus gunnii, Eucalyptus regnan, Eucalyptus sideroxylon, Eucalyptus smithii, Eucalyptus niphophila, Lavandula angustifolia, Lavandula latifolia, Lavandula pinnata, Lavandula pubescens, Lavandula rontundifoloia, Lavandula intermedia, Lavandula multifida, Lavandula stoechas, Vanilla planifolia, Vanilla odorata,* and mixtures thereof.

According to one embodiment, the composition for attracting pests as described hereinabove is an aqueous composition. In another embodiment, the composition for attracting pests as described hereinabove is an emulsion.

Preferably, the composition for attracting pests as described hereinabove does not contain any substance toxic for animal and human health and for the environment. In one embodiment, the composition for attracting pests as described hereinabove does not contain any biocide. In one embodiment, the composition for attracting pests as described hereinabove does not contain any pesticide. In one embodiment, the composition for attracting pests as described hereinabove does not contain any insecticide. In one embodiment, the composition for attracting pests as described hereinabove does not contain any acaricide.

The present invention also relates to a device for attracting pests as described hereinabove containing, covered or impregnated with the composition for attracting pests of the invention.

According to one embodiment, the device for attracting pests of the invention contains, is covered or is impregnated with the composition comprising menthone as described hereinabove. In one embodiment, the device for attracting pests of the invention contains, is covered or is impregnated with the composition comprising menthone at the concentration described hereinabove.

According to one embodiment, the device for attracting pests of the invention contains, is covered or is impregnated with the composition comprising an essential oil comprising menthone, preferably essential oil of *Mentha piperita,* as described hereinabove. In one embodiment, the device for attracting pests of the invention contains, is covered or is impregnated with the composition comprising an essential oil comprising menthone, preferably essential oil of *Mentha piperita,* wherein the composition comprises said essential oil at the concentration described hereinabove.

According to one embodiment, the device for attracting pests of the invention comprises a support to hold said pests, said support being susceptible to contain, be covered or be impregnated with the composition comprising menthone or an essential oil comprising menthone, preferably essential oil of *Mentha piperita,* as described hereinabove.

In one embodiment, said support is a solid support containing the composition for attracting pests of the invention. In another embodiment, said support is a solid support covered with the composition for attracting pests of the invention. In another embodiment, said support is a solid support impregnated with the composition for attracting pests of the invention. According to the invention, a solid support covered or impregnated with the composition for attracting pests of the invention means that at least part of the surface of the solid support is covered or impregnated with said composition.

In one embodiment, at least about 10%, 20%, 30%, 40%, 50%, 60%, 70%, 80%, 90%, 95% or 99% of the surface of the solid support is covered or impregnated with the composition for attracting pests of the invention. In another embodiment, all of the surface, *i.e.,* 100%, of the solid support is covered or impregnated with the composition for attracting pests of the invention.

Examples of solid support to hold pests as described hereinabove include, without being limited to, a strip of

paper; glue; adhesive tape; plastic such as a sheet of plastic, a piece of plastic, a plastic bag; wood such as a piece of wood, a wooden box; metal such as a piece of metal, in particular a piece of aluminum; vegetable matter for example leaves; a container; a cardboard box; pellets; a bamboo box.

In one embodiment, the solid support to hold pests as described hereinabove is a strip of paper, plastic, wood, cardboard or a like, covered at least in part with a sticky substance such as glue.

In one embodiment, the support to hold pests as described hereinabove, in particular the solid support to hold pests as described hereinabove, is a porous support. Therefore, in one embodiment, the support to hold pests as described hereinabove, in particular the solid support to hold pests as described hereinabove, is impregnated with the composition for attracting pests of the invention. According to the invention, a porous support impregnated with said composition means that at least part of the porous support is impregnated with said composition.

In one embodiment, at least about 10%, 20%, 30%, 40%, 50%, 60%, 70%, 80%, 90%, 95% or 99% of the porous support is impregnated with the composition for attracting pests of the invention. In another embodiment, all of the porous support, *i.e.*, 100%, is impregnated with the composition for attracting pests of the invention.

Examples of porous support to hold pests as described hereinabove include, without being limited to, a cloth such as, for example, a sheet, a furniture cover, a piece of felt, a wipe, a linen; a sponge; a piece of wood; a porous stone such as pumice; plaster; cardboard.

According to one embodiment, the device for attracting pests of the invention further comprises a desiccant compound, such as, for example, a desiccant powder.

Desiccant compounds may be used as pesticide as they desiccate/dehydrate pests as described hereinabove upon direct contact. Examples of desiccant compounds include, without being limited to, powders such as talc, ordinary salt, activated charcoal, silicon dioxide, calcium sulfate (drierite), calcium chloride, clay (preferably ultra-ventilated green clay or actapulgite), diatomaceous earth, and molecular sieves (for example, zeolites); gels such as silica gel; and any mixtures thereof.

According to a particular embodiment, the device of the invention is a device for attracting mites.

In one embodiment, the present invention relates to a device for attracting mites comprising or consisting of a support to hold mites, preferably a solid support or a porous support, said support being susceptible to contain, be covered or be impregnated with the composition comprising menthone or an essential oil comprising menthone, preferably essential oil of *Mentha piperita,* as described hereinabove. In one embodiment, the device for attracting mites comprises or consists of a support to hold mites, preferably a solid support or a porous support, containing, covered or impregnated with the composition comprising menthone or an essential oil comprising menthone, preferably essential oil of *Mentha piperita,* as described hereinabove.

In one embodiment, the device for attracting mites comprises or consists of a solid support to hold mites, said solid support being susceptible to contain, be covered or be impregnated with the composition comprising menthone or an essential oil comprising menthone, preferably essential oil of *Mentha piperita,* as described hereinabove. In another embodiment, the device for attracting mites comprises or consists of a porous support to hold mites, said porous support being susceptible to contain, be covered or be impregnated with the composition comprising menthone or an essential oil comprising menthone, preferably essential oil of *Mentha piperita,* as described hereinabove.

In one embodiment, the device for attracting mites comprises or consists of a solid support to hold mites, said solid support containing, covered or impregnated with the composition comprising menthone or an essential oil comprising menthone, preferably essential oil of *Mentha piperita,* as described hereinabove. In another embodiment, the device for attracting mites comprises or consists of a porous support to hold mites, said porous support containing, covered or impregnated with the composition comprising menthone or an essential oil comprising menthone, preferably essential oil of *Mentha piperita,* as described hereinabove.

In one embodiment, the device of the invention is a device for attracting mites comprising:

- a support to hold mites, preferably a solid support or a porous support, said support being susceptible to contain, be covered or be impregnated with the composition comprising menthone or an essential oil comprising menthone, preferably essential oil of *Mentha piperita,* as described hereinabove; and
- a desiccant compound;

wherein said desiccant compound is positioned at proximity to the support susceptible to contain, be covered or be impregnated with said composition.

In another embodiment, the device of the invention is a device for attracting mites comprising:

- a support to hold mites, preferably a solid support or a porous support, said support containing, covered or impregnated with the composition comprising menthone or an essential oil comprising menthone, preferably essential oil of *Mentha piperita,* as described hereinabove; and
- a desiccant compound;

wherein said desiccant compound is positioned at proximity to the support containing, covered or impregnated with said composition.

In one embodiment, the device of the invention is a device for attracting mites comprising:

- a support to hold mites, preferably a solid support or a porous support, said support being susceptible to contain, be covered or be impregnated with the composition comprising menthone or an essential oil comprising menthone, preferably essential oil of *Mentha piperita,* as described hereinabove; and
- a desiccant compound;

wherein said desiccant compound is positioned on the support susceptible to contain, be covered or be impregnated with said composition.

In another embodiment, the device of the invention is a device for attracting mites comprising:

- a support to hold mites, preferably a solid support or a porous support, said support containing, covered or impregnated with the composition comprising menthone or an essential oil comprising menthone, preferably essential oil of *Mentha piperita,* as described hereinabove; and
- a desiccant compound;

wherein said desiccant compound is positioned on the support containing, covered or impregnated with said composition.

Another object of the invention is a kit for attracting pests as described hereinabove comprising the composition for attracting pests of the invention to be applied to a support, to cover or to impregnate a support with.

In one embodiment, the kit of the invention comprises at least one unit dose of the composition for attracting pests of the invention.

In one embodiment, the kit for attracting pests of the invention further comprises at least one unit dose of at least one additional attracting agent and/or at least one excipient.

In a particular embodiment, the at least one unit dose of the composition for attracting pests of the invention, and optionally at least one unit dose of at least one additional attracting agent and/or at least one excipient, are to be diluted in an appropriate volume of solvent, preferably water.

In one embodiment, the kit further comprises a solvent, preferably water, into which the at least one unit dose of the composition for attracting pests of the invention, and optionally at least one unit dose of at least one additional attracting agent and/or at least one excipient, have to be diluted.

In one embodiment, the kit of the invention further comprises a support to hold pests as described hereinabove. Therefore, in one embodiment, the kit of the invention comprises a support to hold pests as described hereinabove and the composition for attracting pests of the invention to be applied to said support, to cover or to impregnate said support with.

In one embodiment, the kit of the invention comprises a support to hold pests as described hereinabove containing, covered or impregnated with the composition for attracting pests of the invention.

According to one embodiment, the kit of the invention comprises:

- a support to hold pests as described hereinabove, preferably a solid support or a porous support, susceptible to contain, be covered or be impregnated with the composition comprising menthone or an essential oil comprising menthone, preferably essential oil of *Mentha piperita,* as described hereinabove; and
- the composition comprising menthone or an essential oil comprising menthone, preferably essential oil of *Mentha piperita,* as described hereinabove, preferably at least one unit dose of said composition.

In a particular embodiment, the kit of the invention is for attracting mites, preferably storage mites, dust mites and/or parasitic mites, and comprises:

- a solid support or a porous support to hold mites, preferably storage mites, dust mites and/or parasitic mites, susceptible to contain, be covered or be impregnated with the composition comprising menthone or an essential oil comprising menthone, preferably essential oil of *Mentha piperita,* as described hereinabove; and
- the composition comprising menthone or an essential oil comprising menthone, preferably essential oil of *Mentha piperita,* as described hereinabove, preferably at least one unit dose of said composition.

Another object of the invention is a kit for attracting pests as described hereinabove comprising a support to hold said pests, preferably a solid support or a porous support, and at least one unit dose of menthone or of an essential oil comprising menthone, preferably essential oil of *Mentha piperita.*

In one embodiment, the kit for attracting pests of the invention further comprises at least one unit dose of at

least one additional attracting agent and/or at least one excipient.

In a particular embodiment, the at least one unit dose of menthone or of an essential oil comprising menthone, preferably essential oil of *Mentha piperita,* and optionally at least one unit dose of at least one additional attracting agent and/or at least one excipient, are to be diluted in an appropriate volume of solvent, preferably water, thereby obtaining the composition for attracting pests according to the invention.

In one embodiment, the kit further comprises a solvent, preferably water, into which the at least one unit dose of menthone or of an essential oil comprising menthone, preferably essential oil of *Mentha piperita,* and optionally at least one unit dose of at least one additional attracting agent and/or at least one excipient, have to be diluted.

According to one embodiment, the kit as described hereinabove further comprises instructions. Instructions may include instructions for selecting an appropriate support to hold pests as described hereinabove on which to apply, *i.e.,* contact, cover or impregnate, the composition for attracting pests of the invention. Instructions may include instructions for applying, *i.e.,* contacting, covering or impregnating, the composition of the invention on the support to hold pests as described hereinabove. Instructions may also include instructions for adding the unit dose of the composition for attracting pests of the invention, or the unit dose of menthone or of an essential oil comprising menthone, preferably essential oil of *Mentha piperita,* and optionally the unit dose of at least one additional attracting agent and/or at least one excipient, to an appropriate volume of solvent, preferably water.

Another object of the invention is a method for attracting pests as described hereinabove. Thus, the present invention also relates to a method for attracting pests as described hereinabove comprising the following steps:

a) contacting, covering, or impregnating a support to hold pests as described hereinabove with the composition comprising menthone or an essential oil comprising menthone, preferably essential oil of *Mentha piperita,* as described hereinabove; and

b) positioning the support in a room or a place or at proximity to an object or a place suspected of containing said pests;

wherein steps a) and b) can be interchanged.

In one embodiment, the method for attracting pests of the invention comprises the following steps:

a) providing a support to hold pests as described hereinabove;

b) contacting, covering, or impregnating said support with the composition comprising menthone or an essential oil comprising menthone, preferably essential oil of *Mentha piperita,* as described hereinabove; and

c) positioning the support in a room or a place or at proximity to an object or a place suspected of containing pests as described hereinabove;

wherein steps b) and c) can be interchanged.

According to one embodiment, by contacting, covering, or impregnating the support to hold pests as described hereinabove with the composition for attracting pests of the invention, is it meant contacting, covering, or impregnating the support to hold said pests with a dose of said composition. In one embodiment, a dose of the composition for attracting pests of the invention is the amount of said composition required to efficiently attract pests as described hereinabove to the support to hold said pests.

According to one embodiment, the support to hold pests as described hereinabove is a solid support or a porous support, to be positioned in a room or a place or at proximity to an object or a place suspected of containing said pests.

According to the invention, at proximity to an object or a place means at a distance of less than 250 cm, 225 cm, 200 cm, 175 cm, 150 cm, 125 cm, 100 cm, 75 cm, 50 cm, 25 cm, 10 cm, 7.5 cm, 5 cm, 2.5 cm, 1 cm, 0.5 cm or less from the object or the place.

According to one embodiment, the method of the invention additionally comprises removing the support to hold pests as described hereinabove containing, covered or impregnated with a dose of the composition for attracting pests of the invention from the room or place or from the proximity of the object or place suspected of containing said pests.

In one embodiment, said support to hold pests is removed after 1 day, 2 days, 3 days, 4 days, 5 days, 6 days, 7 days or more. In one embodiment, said support to hold pests is removed after 1 week, 2 weeks, 3 weeks, 4 weeks, or more. In one embodiment, said support to hold pests is removed after 1 month, 2 months, 3 months, 4 months, 5 months, 6 months, 7 months, 8 months, 9 months, 10 months, 11 months, 12 months or more.

In one embodiment, the support to hold pests as described hereinabove is removed after about 24 hours, 18 hours, 15 hours, 12 hours, 9 hours, 6 hours, 5 hours, 4 hours, 3 hours, 2 hours or 1 hour. In a particular embodiment, the support to hold pests as described hereinabove, preferably mites, is removed after about 1 hour.

According to one particular embodiment, the method of the invention is a method for attracting mites, preferably storage mites, dust mites, and/or parasitic mites.

In one embodiment, the present invention relates to a method for attracting mites, preferably storage mites, dust mites and/or parasitic mites, comprising:

a) contacting, covering or impregnating a support to hold storage mites, dust mites and/or parasitic mites with the composition comprising menthone or an essential oil comprising menthone, preferably essential oil of *Mentha piperita,* as described hereinabove; and
b) positioning the support in a room or place, at proximity to or in contact with an object or a place suspected of containing storage mites, dust mite and/or parasitic mites;

wherein steps a) and b) can be interchanged.

In another embodiment, the present invention relates to a method for attracting mites, preferably storage mites, dust mites and/or parasitic mites, comprising:

a) providing a support, preferably a solid support or a porous support, to hold storage mites, dust mites and/or parasitic mites as described hereinabove;
b) contacting, covering or impregnating said support with the composition comprising menthone or an essential oil comprising menthone, preferably essential oil of *Mentha piperita,* as described hereinabove; and
c) positioning the support in a room or place, at proximity to or in contact with an object or a place suspected of containing storage mites, dust mites and/or parasitic mites;

wherein steps b) and c) can be interchanged.

In one embodiment, the method of the invention is a method for attracting storage mites and/or dust mites.

In one embodiment, the method of the invention is a method for attracting storage mites and/or dust mites suspected to infest houses, in particular the environment provided by furniture such as beds, mattresses, carpets, armchairs, sofas, and/or padded pieces used by humans and pets. Thus, in one embodiment, in the method of the invention the support, preferably a solid support or a porous support, may be positioned in a house, in particular in, on or at proximity to furniture such as beds, mattresses, carpets, armchairs, sofas, or padded pieces used by humans and pets.

In one embodiment, the method of the invention is a method for attracting storage mites and/or dust mites suspected to infest pets, pet baskets, pet beds, pet houses, pet stores, animal rearing facilities, and/or veterinary clinics. Thus, in one embodiment, in the method of the invention the support, preferably a solid support or a porous support, may be positioned in, on or at proximity to a pet basket, a pet bed, a pet house, a pet store, an animal rearing facility, or a veterinary clinic.

In one embodiment, the method of the invention is a method for attracting storage mites.

In one embodiment, the method of the invention is a method for attracting storage mites suspected to infest granaries, hay lofts, grain silos, food stores, food stocks, means of carrying food, houses, pet stores, animal rearing facilities, and/or veterinary clinics. Thus, in one embodiment, in the method of the invention the support, preferably a solid support or a porous support, may be positioned in a granary, a hay loft, a grain silo, a food store, a mean of carrying food, a house, a pet store, an animal rearing facility, or a veterinary clinic.

In one embodiment, the method of the invention is a method for attracting dust mites.

In one embodiment, the method of the invention is a method for attracting dust mites suspected to infest beds, mattresses, carpets, armchairs, sofas, and/or padded pieces used by humans and pets. Thus, in one embodiment, in the method of the invention the support, preferably a solid support or a porous support, may be positioned in a house, in a room, in a bedroom, in particular in, on or at proximity to furniture such as beds, mattresses, carpets, armchairs, sofas, or padded pieces used by humans and pets.

In one embodiment, the method of the invention is a method for attracting parasitic mites.

In one embodiment, the method of the invention is a method for attracting parasitic mites suspected to infest birds housing, in particular henhouses. Thus, in one embodiment, in the method of the invention the support, preferably a solid support or a porous support, may be positioned in bird housing, in particular in a henhouse.

## BRIEF DESCRIPTION OF THE DRAWINGS

**Figure 1** is a graph showing the mean efficiency of compositions comprising menthone in attracting the storage mite *Tyrophagus putrescentiae.* The mean efficiency corresponds to the mean percentage of mite individuals which moved towards the rectangle of filter paper loaded with the composition comprising menthone at the indicated concentration (L/L), calculated from the number of individuals which moved towards one of the two rectangles of filter paper. Asterisks indicate a significative difference by comparison with the mites which moved towards the rectangle of filter paper loaded with water (*: p-value < 0.05).

**Figure 2** is a graph showing the mean efficiency of compositions comprising menthone in attracting the dust mite *Dermatophagoides pteronyssinus.* The mean efficiency corresponds to the mean percentage of mite individuals which moved towards the support disc of vegetable fiber loaded with the composition comprising menthone at the indicated concentration (L/L), calculated from the number of individuals which moved towards one of the two support discs of vegetable fibers. Asterisks indicate a significative difference by comparison with the mites which moved towards the support disc loaded with water (**: p-value < 0.01).

**Figure 3** is a graph showing the mean efficiency of compositions comprising menthone in attracting the dust mite *Dermatophagoides farinae.* The mean efficiency corresponds to the mean percentage of mite individuals which moved towards the support disc of vegetable fiber loaded with the composition comprising menthone at the indicated concentration (L/L), calculated from the number of individuals which moved towards one of the two support discs of vegetable fibers. Asterisks indicate a significative difference by comparison with the mites which moved towards the support disc loaded with water (*: p-value < 0.05).

## EXAMPLES

The present invention is further illustrated by the following examples.

Example 1:

***Materials and Methods***

*Material*

**Mites**

Experiments were conducted with species of storage mites, *i.e., Tyrophagus putrescentiae* and with species of dust mites, *i.e., Dermatophagoides pteronyssinus* and *Dermatophagoides farinae.*

**Mite rearing**

*Tyrophagus putrescentiae* was fed with a mixture composed of 2 parts of powdered laboratory animal food, 2 parts of dried yeast and 1 part of dried fish powder (Miyamoto *et al.,* 1975).

*Dermatophagoides pteronyssinus* and *Dermatophagoides farinae* were fed with a 1:1:1 mixture of dried powdered yeast, human skin taken from electric shavers and dog food (Larson *et al.,* 1969; Andersen, 1988).

All mites were reared under defined conditions. The humidity was kept between 70 and 80 % through the use of a saturated solution of sodium chloride (Solomon, 1951). Mites rearings were placed in an incubator set at 25 °C (Miyamoto *et al.,* 1975).

**Menthone**

A composition comprising menthone was prepared by diluting liquid menthone with a density of 0.894 (mixture of stereoisomers L-menthone and D-isomenthone, with 98% purity, from Alfa Aesar, Haverhill, USA) in water to obtain a concentration of 0.1 μl/mL (*i.e.,* $10^{-4}$ L/L), corresponding to a concentration of about 0.0894 mg/mL or a concentration of about 0.00894 % (w/v). Said composition has a molar concentration of menthone of about 0.58 mM

Compositions comprising menthone at different concentrations were prepared by serial dilutions in water of the composition comprising menthone at $10^{-4}$ L/L (from $10^{-4}$ L/L to $10^{-8}$ L/L, *i.e.,* from about 0.0894 mg/mL to about 8.94 ng/mL) and their capacity to attract acarids was tested.

Hereafter, said compositions prepared from liquid menthone are referred to as "compositions comprising menthone alone" or "compositions comprising menthone".

**Peppermint oil**

A composition comprising peppermint oil (also known as essential oil of *Mentha piperita*), which itself comprises menthone, was prepared by diluting peppermint oil with a density of 0.898 g/mL (natural peppermint oil from *Mentha piperita L.,* Sigma, St Louis, USA) in water to obtain a concentration of 0.1 μl/mL (*i.e.,* $10^{-4}$ L/L), corresponding to a concentration of about 0.0898 mg/mL or a concentration of about 0.00898 % (w/v). Compositions comprising peppermint oil at different concentrations were prepared by serial dilutions in water of the composition comprising peppermint oil at

$10^{-4}$ L/L (from $10^{-4}$ L/L to $10^{-6}$ L/L, *i.e.,* from about 0.0898 mg/mL to about 0.898 μg/mL) and their capacity to attract acarids was tested.

Hereafter, said compositions prepared from peppermint oil are referred to as "compositions comprising menthone within peppermint oil" or "compositions comprising peppermint oil".

*Methods*

**Two-choice bioassays for *Tyrophagus putrescentiae***

The experimental protocol was inspired by the quantitative choice bioassay run by Synder *et al.,* in 1993. Said bioassay consisted of two rectangles of filter paper of equal dimensions, positioned so as to be parallel to each other and less than 2 cm apart in a petri dish with a 6 cm diameter. 10 μL microliters of the composition comprising menthone, either alone or within peppermint oil, were loaded on one rectangle and 10 μL of solvent (*i.e.,* water) were loaded on the other as a control. After the solvent evaporated, a small strip of filter paper was used to bridge the rectangles. A group of 30-40 mites was then transferred to the middle of the bridge and their movements were observed. The rectangle for which they exited the bridge was recorded. Each assay comprised two sets of rectangles of filter paper connected with a bridge, with the composition comprising menthone, either alone or within peppermint oil, loaded on opposing rectangles in each set (e.g., rectangle on the left in the first set, and rectangle on the right in the second set). Data were submitted to Fisher analysis.

**Two-choice bioassays for *Dermatophagoides farinae* and *Dermatophagoides pteronyssinus***

Responses of *Dermatophagoides spp.* to compositions comprising menthone, either alone or within peppermint oil, were tested in a two-choice bioassay as described in Otieno *et al.,* 1985. Said bioassay comprised two support discs made of vegetable fiber (with a diameter of 1.7 cm), *i.e.,* a test support and a control support, placed in a Petri dish (with a diameter of 6 cm) kept at 20-28°C in the dark at 30% humidity. Compositions comprising menthone, either alone or within peppermint oil, (50 μL or less) were applied via a syringe to the test support. The control support was loaded with water only. An appropriate number of mites were placed in the center of the dish, equidistant from the test support and the control support. The bioassay system was then left for 24hr or less at 20-28°C in the dark at 30% humidity before a count of the mites assembled on the test support and on the control support was made. Several replicates were run for each test.

**Statistics**

Statistical significance was assessed using a Fisher's exact test.

***Results***

The attracting properties of compositions comprising menthone, either alone or within peppermint oil, were tested in the experimental set-ups described hereinabove on the storage mite *Tyrophagus putrescentiae,* the dust mite *Dermatophagoides pteronyssinus* and the dust mite *Dermatophagoides farinae.* The results are presented in **Table 1, Table 2** and **Figure 1** for *Tyrophagus putrescentiae,* in **Table 3** and **Figure 2** for *Dermatophagoides pteronyssinus,* and in **Table 4** and **Figure 3** for *Dermatophagoides farinae.* The mean efficiency corresponds to the percentage of mites attracted to the composition comprising menthone, either alone or within peppermint oil, at the indicated concentration.

**Table 1: Attracting properties of compositions comprising menthone on** *Tyrophagus putrescentiae*

| Concentration (L/L) | Number of experiments | Mean efficiency (%) | Standard deviation | Fisher's exact test (p-value) |
|---|---|---|---|---|
| $10^{-4}$ | 5 | 50 | 11 | NS |
| $10^{-5}$ | 7 | 47 | 11 | NS |
| $10^{-6}$ | 13 | 57 | 7 | * |
| $10^{-7}$ | 7 | 53 | 9 | NS |
| $10^{-8}$ | 7 | 49 | 11 | NS |
| NS: not significant; *: p-value < 0.05 | | | | |

57% of the individuals which moved towards a rectangle of filter paper, moved towards the rectangle of filter paper loaded with the composition comprising menthone at $10^{-6}$ L/L, corresponding to a concentration of menthone of about $9x10^{-4}$ mg/mL (Fisher's exact test, p-value < 0,05). The data thus demonstrate that the composition comprising menthone at $10^{-6}$ L/L significantly attracts *Tyrophagus putrescentiae.*

**Table 2: Attracting properties of compositions comprising peppermint oil on *Tyrophagus putrescentiae***

| Concentration (L/L) | Number of experiments | Mean efficiency (%) | Standard deviation | Fisher's exact test (p-value) |
|---|---|---|---|---|
| $10^{-6}$ | 8 | 67 | 21 | * |
| *: p-value < 0.05 | | | | |

67% of the individuals which moved towards a rectangle of filter paper, moved towards the rectangle of filter paper loaded with the composition comprising peppermint oil at $10^{-6}$ L/L, corresponding to a concentration of peppermint oil of about $9x10^{-4}$ mg/mL (Fisher's exact test, p-value < 0,05). The data thus demonstrate that the composition comprising peppermint oil at $10^{-6}$ L/L significantly attracts *Tyrophagus putrescentiae.*

**Table 3: Attracting properties of compositions comprising menthone on *Dermatophagoides pteronyssinus***

| Concentration (L/L) | Number of experiments | Mean efficiency (%) | Standard deviation | Fisher's exact test (p-value) |
|---|---|---|---|---|
| $10^{-4}$ | 4 | 42 | 12 | NS |
| $10^{-5}$ | 3 | 50 | 26 | NS |
| $10^{-6}$ | 6 | 67 | 15 | ** |
| $10^{-7}$ | 3 | 42 | 10 | NS |
| NS: not significant; **: p-value < 0.01 | | | | |

67% of the individuals which moved toward a vegetable fiber support disc moved towards the test disc impregnated with the composition comprising menthone at $10^{-6}$ L/L, corresponding to a concentration of menthone of about $9x10^{-4}$ mg/mL (Fisher's exact test, p-value < 0,01). The data thus demonstrate that the composition comprising menthone at $10^{-6}$ L/L significantly attracts *Dermatophagoides pteronyssinus.*

**Table 4: Attracting properties of compositions comprising menthone on *Dermatophagoides farinae***

| Concentration (L/L) | Number of experiments | Mean efficiency (%) | Standard deviation | Fisher's exact test (p-value) |
|---|---|---|---|---|
| $10^{-4}$ | 4 | 41 | 12 | NS |
| $10^{-5}$ | 3 | 40 | 11 | NS |
| $10^{-6}$ | 4 | 62 | 15 | * |
| $10^{-7}$ | 3 | 49 | 14 | NS |
| $10^{-8}$ | 4 | 51 | 21 | NS |
| NS: not significant; *: p-value < 0.05 | | | | |

62 % of the individuals which moved toward a vegetable fiber support disc moved towards the test disc impregnated with the composition comprising menthone at $10^{-6}$ L/L, corresponding to a concentration of menthone of about $9x10^{-4}$ mg/mL (Fisher's exact test, p-value < 0.05). The data thus demonstrate that the compositions comprising menthone at $10^{-6}$ L/L significantly attracts Dermatophagoides farinae.

Example 2:

***Materials and Methods***

*Material*

**Mites**

The mites *Tyrophagus putrescentiae, Dermatophagoides pteronyssinus* and *Dermatophagoides farinae* were reared under the conditions described in Example 1.

**Menthone**

A composition comprising menthone at a concentration of $10^{-6}$ L/L was prepared by diluting 1 μL liquid menthone as described hereinabove (mixture of stereoisomers L-menthone and D-isomenthone, with 98% purity, from Alfa Aesar, Haverhill, USA) in 1L of water. Hereafter, said composition is referred to as "compositions comprising menthone alone" or "compositions comprising menthone".

**Peppermint oil**

A composition comprising peppermint oil at a concentration of $10^{-5}$ L/L was prepared by diluting 10 μL peppermint oil (natural peppermint oil from *Mentha piperita L.,* Sigma, St Louis, USA) as described hereinabove in 1L of water. Hereafter, said composition is referred to as "composition comprising menthone within peppermint oil" or "composition comprising peppermint oil".

*Methods*

**Simulated use tests**

The aim of these tests was to mimic real-life utilization of the compositions for attracting pests of the invention and thus to assess the efficacity of said compositions in real-life conditions.

In order to simulate real-life utilization of the composition for attracting pests of the invention, a common household furniture such as a cushion was infested with living mites and treated with a composition comprising menthone at a concentration of $10^{-6}$ L/L (corresponding to a concentration of menthone of about $9x10^{-4}$ mg/mL) or with a composition comprising peppermint oil at a concentration of $10^{-5}$ L/L (corresponding to a concentration of peppermint oil of about $9x10^{-3}$ mg/mL). As described in Japanese application JP2000336007 and in US patent US6415545, the treatment consisted in laying a sheet on the infested household furniture and spraying the compositions to be tested over it. The number of attracted and unattracted mites was then counted to evaluate the efficacy of the tested composition. All the tests were run at 20-25°C and 30-35% relative humidity, conditions normally found in households.

Step 1 - infestation of cushions with living mites

Brand new cushions (43x30x6cm, Tom&Co) were infested with 400 *Tyrophagus putrescentiae,* 100 *Dermatophagoides farinae* and 100 *Dermatophagoides pteronyssinus.* The proportion of each species respected the average composition of natural mite populations that can be found in a pet basket: 2/3 of storage mites, 1/3 of house dust mites. Small pieces of dry dog food were spread over the cushions as a nourishment for mites. After the infestation, mites were allowed to settle down for 15 hours.

Step 2 - treatment of infested cushions

After 15 hours, a dark sheet was placed over the cushion to be treated. The size of the sheet was sufficient to cover the entire upper surface of the cushion (43x30cm). The sheet was sprayed 6 times (total volume sprayed about 4 ml) with a composition comprising menthone, either alone or within peppermint oil, or with water (control), keeping the bottle at a distance of about 30 cm from the sheet to be sprayed. Sprays were evenly distributed in order to cover the totality of the sheet. The sheet was left in place for 1h. 3 replicates were run with the composition comprising menthone, either alone or within peppermint oil, and 3 replicates were run with the control.

Step 3 - Vacuuming of the sheet and the cushion

In order to determine the number of mites within an infested place, the usual method is to vacuum the infested place (Wassenaar 1988). Each sheet was vacuumed for 2 minutes using a special filter (as described in the European patent application EP0630478) that retains the collected dust. The dust sample was then analyzed (see Step 4) in order to determine the number of mites attracted by the composition comprising menthone, either alone or within peppermint oil. Similarly, after removal of the sheet, each cushion was vacuumed to determine the number of remaining mites (*i.e.,* the number of mites that were not attracted by the composition comprising menthone, either alone or within peppermint oil). The relative proportion of mites into the sheet and into the cushion determined the efficacy of the treatment (see Step 4).

Step 4 - Analysis of dust samples

In order to quantify the mites present in the dust samples collected either from the sheets or from the cushions, the method described by Arlian *et al.* (1982) was applied. Each dust sample was resuspended in 25 ml of a saturated sodium chloride solution comprising a few drops of detergent. The suspension was then rinsed through a 235 mesh (45 μm opening) sieve and the mites and dust retained on the sieve were stained with crystal violet or blue methylene. After excess stain was rinsed off with water, the material remaining on the sieve was rinsed into an intergrid petri dish and the live and dead mites were counted with the aid of a stereoscope. Since mites are found both on the surface and at the bottom of the dish, both locations were analyzed. Dust components other than mites stain and provide a contrast background helping recognize mites. Thus, mites appeared white against a violet or blue-stained background. Each dust sample issued from Step 3 was analyzed. At the end of this step, each replicate was associated with two values: the number of attracted mites (*i.e.*, mites collected from the sheet that covered the cushion) and the number of unattracted mites (*i.e.,* mites collected from the cushion after removal of the sheet).

Step 5 - Assessment of the treatment efficacy

Data collected in Step 3 were used to calculate the efficacy of the tested composition. The efficacy was calculated as follows:

Efficacy = [number of mites counted in the dust sample collected from the sheet/(number of mites counted in the dust sample collected from the sheet that covered the cushion + number of mites counted in the dust sample collected from the cushion after removal of the sheet)]*100

In other words:

Efficacy = [number of attracted mites/total number of mites]*100,

wherein

- the number of attracted mites is the number of mites found in the sheet that covered the cushion, and
- the total number of mites is the number of mites found in the sheet that covered the cushion and the number of remaining mites found in the cushion after removal of said sheet.

The average efficacy was calculated from 3 replicates (for the treatment and for the control).

**Statistics**

Statistical significance between the treatment and the control was assessed using a Fisher's exact test.

***Results***

The attracting properties of compositions comprising menthone, either alone or within peppermint oil, were

tested in the real-life conditions as described hereinabove.

The efficacy of a composition comprising menthone for attracting the storage mite *Tyrophagus putrescentiae,* the dust mite *Dermatophagoides pteronyssinus* and the dust mite *Dermatophagoides farinae* in real-life conditions is presented in **Table 5** below. The efficacy of a composition comprising peppermint oil for attracting the storage mite *Tyrophagus putrescentiae* and the dust mite *Dermatophagoides pteronyssinus* in real-life conditions is presented in **Table 6** below.

**Table 5: Efficacy of composition comprising menthone sprayed on a cushion infested with *Tyrophagus putrescentiae, Dermatophagoides farinae* and *Dermatophagoides pteronyssinus***

| | *Dermatophagoides pteronyssinus* | *Dermatophagoides farinae* | *Tyrophagus putrescentiae* | Total number of mites |
|---|---|---|---|---|
| Menthone $10^{-6}$ L/L | 44% (±5%) | 47% (±6%) | 69% (±8%) | 54% (±5%) |
| Control (water) | 24% (±11%) | 23% (±4%) | 43% (±7%) | 33% (±3%) |
| Menthone: N = 3; water: N = 3 | | | | |

The composition comprising menthone at $10^{-6}$ L/L (corresponding to a concentration of menthone of about $9x10^{-4}$ mg/mL) attracts 44 % of the population of *Dermatophagoides pteronyssinus,* 47 % of the population of *Dermatophagoides farinae* and 69 % of the population of *Tyrophagus putrescentiae* out of the cushion in one treatment (*i.e.,* after one application in 6 sprays followed by a 1h incubation). Compared to the control, the comprising menthone at $10^{-6}$ L/L attracts 21 % more mites out of the infested cushion (Fisher's exact test, p-value = 0.0006).

**Table 6: Efficacy of composition comprising peppermint oil sprayed on a cushion infested with *Tyrophagus putrescentiae* and *Dermatophagoides pteronyssinus***

| | *Dermatophagoides pteronyssinus* | *Tyrophagus putrescentiae* | Total number of mites |
|---|---|---|---|
| Peppermint oil $10^{-5}$ L/L | 39 % (±7%) | 60 % (±9%) | 46 % (±8%) |
| Control (water) | 20 % (±6%) | 48 % (±13%) | 29 % (±10%) |
| Peppermint oil: N = 6; water: N = 5 | | | |

The composition comprising peppermint oil at $10^{-5}$ L/L (corresponding to a concentration of peppermint oil of about $9x10^{-3}$ mg/mL) attracts 39 % of the population of *Dermatophagoides pteronyssinus* and 60 % of the population of *Tyrophagus putrescentiae* out of the cushion in one treatment (*i.e.,* after one application in 6 sprays followed by a Ih incubation). Compared to the control, the comprising peppermint oil at $10^{-5}$ L/L attracts 17 % more mites out of the infested cushion (Fisher's exact test, p-value = 0.0344).

References

Andersen A. 1988. Population Growth and Developmental Stages of the House Dust Mite, Dermatophagoides pteronyssinus (Acari: Pyroglyphidae). J. Med. Entomol., 25(5): 370 - 373.

Arlian L. G., Bernstein M. D. and Gallagher J. S. 1982. The prevalence of house dust mites, Dermatophagoides spp, and associated environmental conditions in homes in Ohio. Clin. Immunol., 69(6): 527 - 532.

Larson D. G., Mitchell W. F. and Wharton G. W. 1969. Preliminary studies on Dermatophagoides farinae Hughes, 1961 (ACARI) and house-dust allergy. J. Med. Entomol., 6(3): 295 - 299.

Miyamoto J, Ishii A. and Sasa M. 1975. A successful method for mass culture of the house dust mite, Dermatophagoides pteronyssinus (Troussart, 1897). The Japanese Journal of Experimental Medicine, 45(2): 133 - 138.

Otieno Dismas A., Hassanali A. Obenchain F. D. Sternberg A. and Galun R. 1985. Identification of guanine as an

assembly pheromone of ticks. Insect Sci. Applic, 6(6): 667 - 670.

Snyder J. C., Guo Z., Thacker R., Goodman J. P. and Pyrek J. S. 1993. 2,3-dihydrofarnesoic acid, a unique terpene from trichomes of Lycopersicon hirsutum, repels spider mites. Journal of Chemical Ecology, 19(12): 2981 - 2997.

Solomon M. E. 1951. Control of Humidity with Potassium Hydroxide Sulphuric Acid, or other Solutions. Bulletin of Entomological Research, 42(3): 543 - 554.

Wassenar D. P. J. 1986. Effectiveness of Vacuum Cleaning and Wet Cleaning in Reducing House-Dust Mites, Fungi and Mite Allergen in a Cotton Carpet: A Case Study. Experimental & Applied Acarology, 4: 53 - 62.

## Claims

1. Use of a composition comprising menthone for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera.

2. The use according to claim **1,** wherein said composition comprises menthone at a concentration ranging from about $10^{-12}$ mg/mL to about 100 mg/mL.

3. The use according to claim **1** or claim **2,** wherein said composition comprises an essential oil, wherein said essential oil comprises said menthone.

4. The use according to claim **3,** wherein said essential oil is selected from the group comprising essential oils of *Mentha piperita, Mentha arvensis, Mentha canadensis, Mentha cervina, Mentha pulegium, Mentha aquatica, Mentha pulegioides* and *Mentha longifolia.*

5. The use according to claim **3** or claim **4,** wherein said essential oil is essential oil of *Mentha piperita.*

6. The use according to any one of claims **3** to **5,** wherein the concentration of said essential oil in the composition ranges from about $10^{-15}$ to about $10^{-1}$ L/L.

7. The use according to any one of claims **1** to **6,** wherein said composition comprises at least one additional attracting agent.

8. The use according to claim **7,** wherein said at least one additional attracting agent is selected from the group comprising tartaric acid, lavender oil, linseed oil, octen-3-ol and acetic acid.

9. The use according to any one of claims **1** to **8,** wherein said composition further comprises at least one solvent, at least one stabilizer, at least one emulsifier and/or at least one perfume.

10. The use according to any one of claims **1** to **9,** wherein said pests are selected from the group comprising mites, ticks, ladybugs, fleas, lice, bed bugs, cockroaches and ants.

11. The use according to any one of claims **1** to **10,** wherein said pests are mites.

12. A method for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera, comprising the following steps:

    a) optionally providing a support to hold said pests;
    b) contacting said support with a composition comprising menthone at a concentration ranging from about $10^{-12}$ mg/mL to about 100 mg/mL or an essential oil comprising menthone, preferably essential oil of *Mentha piperita,* wherein the concentration of said essential oil in the composition ranges from about $10^{-15}$ to about $10^{-1}$ L/L; and
    c) positioning the support in a room or a place or at proximity to an object or a place suspected of containing said pests;

wherein steps b) and c) can be interchanged.

**13.** The method according to claim **12,** wherein said pests are selected from the group comprising mites, ticks, ladybugs, fleas, lice, bed bugs, cockroaches and ants.

**14.** The method according to claim **12** or claim **13,** wherein said pests are mites.

**15.** A kit for attracting pests selected from the group comprising Acari, Cimicidae, Neuropterida, Thysanoptera, Psocodea, Polyneoptera, Paleoptera, Coleoptera, Strepsiptera, Mecoptera, Trichoptera, Siphonaptera, and Hymenoptera, comprising a composition comprising menthone at a concentration ranging from about $10^{-12}$ mg/mL to about 100 mg/mL or an essential oil comprising menthone, preferably essential oil of *Mentha piperita,* wherein the concentration of said essential oil in the composition ranges from about $10^{-15}$ to about $10^{-1}$ L/L, and optionally a support to hold said pests.

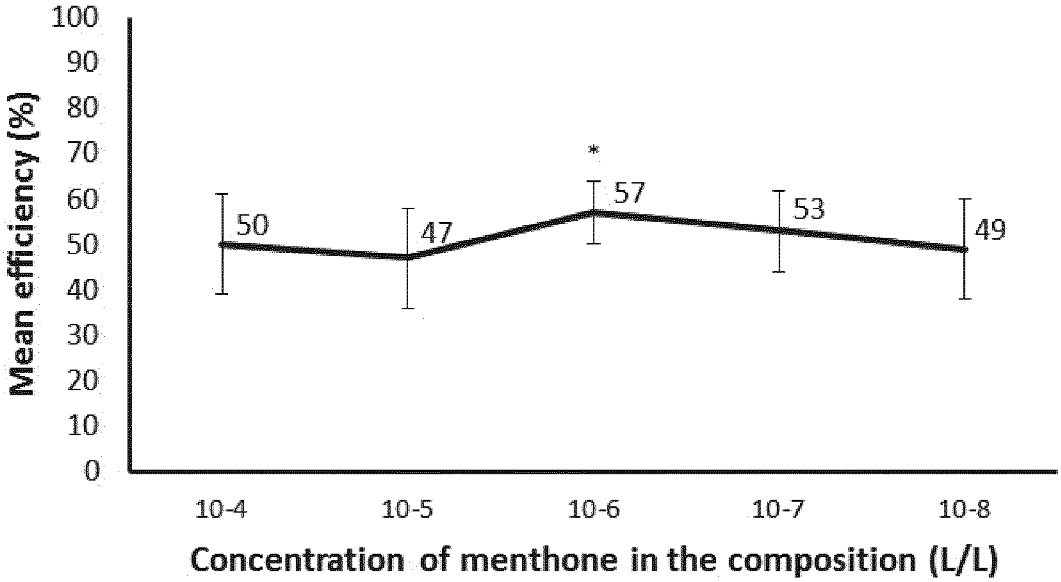
100
90
80
70
60
50
40
30
20
10
0
Mean efficiency (%)
*
50
47
57
53
49
10-4
10-5
10-6
10-7
10-8
Concentration of menthone in the composition (L/L)

FIG. 1

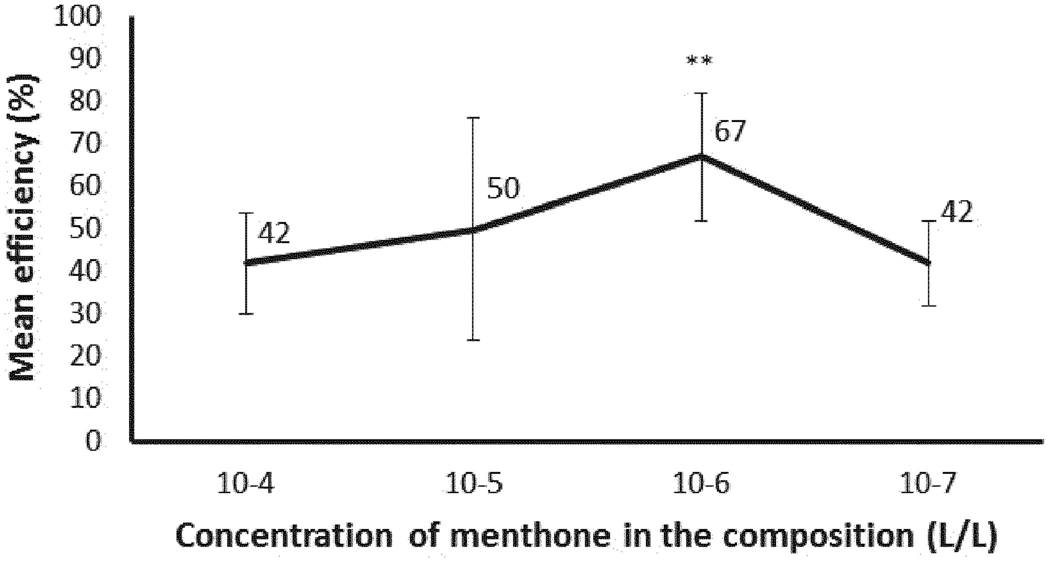
Mean efficiency (%)
100
90
80
70
60
50
40
30
20
10
0
**
42
50
67
42
10-4
10-5
10-6
10-7
Concentration of menthone in the composition (L/L)

FIG. 2

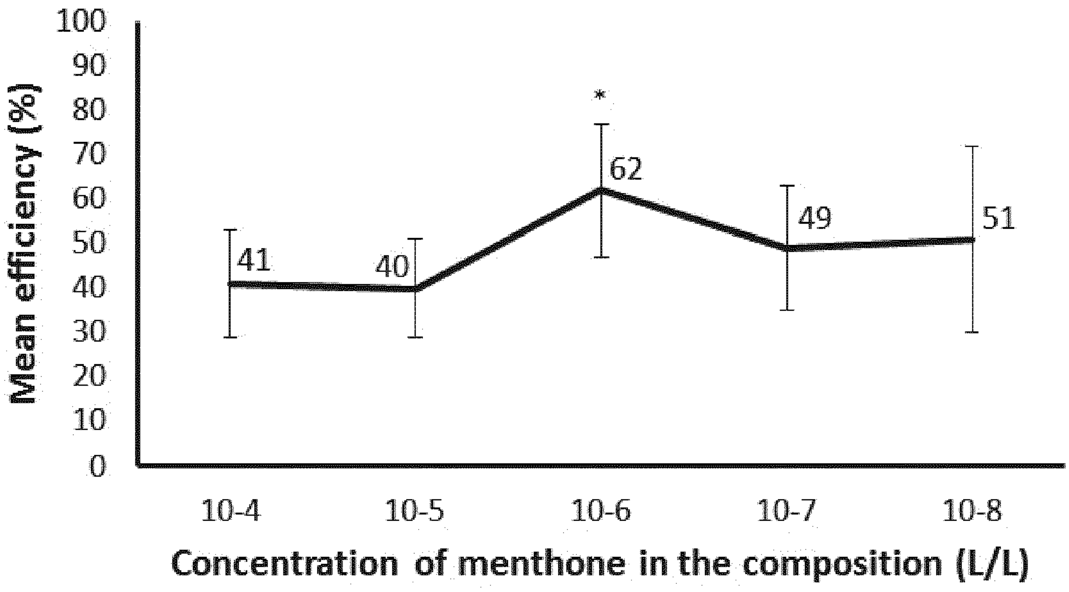
Mean efficiency (%)
100
90
80
70
60
50
40
30
20
10
0
*
41
40
62
49
51
10-4
10-5
10-6
10-7
10-8
Concentration of menthone in the composition (L/L)

FIG. 3

Europäisches Patentamt
European Patent Office
Office européen des brevets

# EUROPEAN SEARCH REPORT

Application Number
EP 18 18 0464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 101 816 297 A (UNIV JILIANG CHINA) 1 September 2010 (2010-09-01) * abstract * * example 1 * * claim 1 * ----- | 1-15 | INV. A01N35/06 |
| X | ML TSAI ET AL: "Chemical Composition and Biological Properties of Essential Oils of Two Mint Species", TROPICAL JOURNAL OF PHARMACEUTICAL RESEARCH, vol. 12, no. 4, 28 August 2013 (2013-08-28), XP055507501, NG ISSN: 1596-5996, DOI: 10.4314/tjpr.v12i4.20 * table 2 * ----- | 15 | |
| A | J. G. RODRIGUEZ ET AL: "Behavior ofTetranychus urticae toward essential oil mixtures from strawberry foliage", JOURNAL OF CHEMICAL ECOLOGY., vol. 2, no. 2, 1 January 1976 (1976-01-01), pages 221-230, XP055507310, NL ISSN: 0098-0331, DOI: 10.1007/BF00987745 * abstract * ----- | 1-15 | TECHNICAL FIELDS SEARCHED (IPC) A01N |
| A | WO 2016/124566 A1 (DOMOBIOS [BE]) 11 August 2016 (2016-08-11) * examples 1-6 * * claims 1, 3 * ----- | 1-15 | |
| A | US 2018/077917 A1 (MAILLEUX ANNE-CATHERINE [BE] ET AL) 22 March 2018 (2018-03-22) * page 5, paragraph [0110] * ----- | 1-15 | |

1 ~~The present search report has been drawn up for all claims~~

| Place of search | Date of completion of the search | Examiner |
|---|---|---|
| Munich | 17 September 2018 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number
EP 18 18 0464

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

11, 14(completely); 1-10, 12, 13, 15(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION SHEET B

Application Number
EP 18 18 0464

The Search Division considers that the present European patent application does not comply with the requirements of unity of invention and relates to several inventions or groups of inventions, namely:

1. claims: 11, 14(completely); 1-10, 12, 13, 15(partially)

   use of a composition comprising menthone for attracting pests selected from the group Acari.

---

2. claims: 1-10, 12, 13, 15(all partially)

   use of a composition comprising menthone for attracting pests selected from the group Cimicidae.

---

3. claims: 1-9, 12, 15(all partially)

   use of a composition comprising menthone for attracting pests selected from the group Neuropterida.

---

4. claims: 1-9, 12, 15(all partially)

   use of a composition comprising menthone for attracting pests selected from the group Thysanoptera.

---

5. claims: 1-10, 12, 13, 15(all partially)

   use of a composition comprising menthone for attracting pests selected from the group Psocodea.

---

6. claims: 1-9, 12, 15(all partially)

   use of a composition comprising menthone for attracting pests selected from the group Polyneoptera.

---

7. claims: 1-9, 12, 15(all partially)

   use of a composition comprising menthone for attracting pests selected from the group Paleoptera.

---

8. claims: 1-10, 12, 13, 15(all partially)

   use of a composition comprising menthone for attracting pests selected from the group Coleoptera.

---

9. claims: 1-9, 12, 15(all partially)

   use of a composition comprising menthone for attracting

Europäisches Patentamt
European Patent Office
Office européen des brevets

# LACK OF UNITY OF INVENTION SHEET B

Application Number
EP 18 18 0464

The Search Division considers that the present European patent application does not comply with the requirements of unity of invention and relates to several inventions or groups of inventions, namely:

pests selected from the group Strepsiptera.

---

10. claims: 1-9, 12, 15(all partially)

use of a composition comprising menthone for attracting pests selected from the group Mecoptera.

---

11. claims: 1-9, 12, 15(all partially)

use of a composition comprising menthone for attracting pests selected from the group Trichoptera.

---

12. claims: 1-10, 12, 13, 15(all partially)

use of a composition comprising menthone for attracting pests selected from the group Siphonaptera.

---

13. claims: 1-10, 12, 13, 15(all partially)

use of a composition comprising menthone for attracting pests selected from the group Hymenoptera.

---

## ANNEX TO THE EUROPEAN SEARCH REPORT ON EUROPEAN PATENT APPLICATION NO. EP 18 18 0464

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2018

| Patent document cited in search report | Publication date | Patent family member(s) | Publication date |
|---|---|---|---|
| CN 101816297 A | 01-09-2010 | NONE | |
| WO 2016124566 A1 | 11-08-2016 | CA 3012537 A1 | 11-08-2016 |
| | | EP 3253203 A1 | 13-12-2017 |
| | | US 2018027793 A1 | 01-02-2018 |
| | | WO 2016124566 A1 | 11-08-2016 |
| US 2018077917 A1 | 22-03-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000336007 B
- JP 2001247410 B
- US 6415545 B
- EP 0630478 A

### Non-patent literature cited in the description


- **ANDERSEN A.** Population Growth and Developmental Stages of the House Dust Mite, Dermatophagoides pteronyssinus (Acari: Pyroglyphidae). *J. Med. Entomol.,* 1988, vol. 25 (5), 370-373
- **ARLIAN L. G. ; BERNSTEIN M. D. ; GALLAGHER J. S.** The prevalence of house dust mites, Dermatophagoides spp, and associated environmental conditions in homes in Ohio. *Clin. Immunol.,* 1982, vol. 69 (6), 527-532
- **LARSON D. G. ; MITCHELL W. F. ; WHARTON G. W.** Preliminary studies on Dermatophagoides farinae Hughes, 1961 (ACARI) and house-dust allergy. *J. Med. Entomol.,* 1969, vol. 6 (3), 295-299
- **MIYAMOTO J ; ISHII A. ; SASA M.** A successful method for mass culture of the house dust mite, Dermatophagoides pteronyssinus (Troussart, 1897). *The Japanese Journal of Experimental Medicine,* 1975, vol. 45 (2), 133-138
- **OTIENO DISMAS A. ; HASSANALI A. ; OBENCHAIN F. D. ; STERNBERG A. ; GALUN R.** Identification of guanine as an assembly pheromone of ticks. *Insect Sci. Applic,* 1985, vol. 6 (6), 667-670
- **SNYDER J. C. ; GUO Z. ; THACKER R. ; GOODMAN J. P. ; PYREK J. S.** 2,3-dihydrofarnesoic acid, a unique terpene from trichomes of Lycopersicon hirsutum, repels spider mites. *Journal of Chemical Ecology,* 1993, vol. 19 (12), 2981-2997
- **SOLOMON M. E.** Control of Humidity with Potassium Hydroxide Sulphuric Acid, or other Solutions. *Bulletin of Entomological Research,* 1951, vol. 42 (3), 543-554
- **WASSENAR D. P. J.** Effectiveness of Vacuum Cleaning and Wet Cleaning in Reducing House-Dust Mites, Fungi and Mite Allergen in a Cotton Carpet: A Case Study. *Experimental & Applied Acarology,* 1986, vol. 4, 53-62